# EUROPÄISCHE PATENTSCHRIFT

(11) **EP 4 558 427 B1**
(45) Veröffentlichungstag und Bekanntmachung des Hinweises auf die Patenterteilung: **02.09.2026**
(21) Anmeldenummer: 23744166.2
(22) Anmeldetag: 18.07.2023
(51) Int. Cl.: B65G 11/02, B65G 47/24, B65G 29/02, B65G 47/14, B65G 11/20

(54) **FÖRDERVORRICHTUNG FÜR BEHÄLTER, INSBESONDERE PHARMAZEUTISCHE BEHÄLTER**
CONVEYING APPARATUS FOR CONTAINERS, MORE PARTICULARLY PHARMACEUTICAL CONTAINERS
APPAREIL DE TRANSPORT POUR CONTENANTS, EN PARTICULIER DES CONTENANTS PHARMACEUTIQUES

(30) Priorität: 19.07.2022 DE 102022118095
(43) Veröffentlichungstag der Anmeldung: 28.05.2025
(73) Patentinhaber: Bausch + Ströbel SE + Co. KG, 74532 Ilshofen (DE)
(72) Erfinder: ZUCKER, Jonas, 74532 Ilshofen (DE)
(74) Vertreter: DTS Patent- und Rechtsanwälte PartmbB
(86) Internationale Anmeldenummer: PCT/EP2023/069925
(87) Internationale Veröffentlichungsnummer: WO 2024/017892

(56) Entgegenhaltungen:
- DE-A1- 3 709 933
- JP-A- 2004 203 524

## Beschreibung

Die vorliegende Erfindung betrifft eine Fördervorrichtung für Behälter, insbesondere für pharmazeutische Behälter aus einem Kunststoffmaterial, bei dem es sich speziell um Kunststoffflaschen handeln kann. Die Reichweite der vorliegenden Erfindung ist jedoch nicht auf eine Anwendung mit pharmazeutischen Packmitteln beschränkt.

In Maschinen zum Verarbeiten pharmazeutischer Behälter kommen häufig sogenannte "Fördertöpfe" zum Einsatz, bei denen es sich um Fördervorrichtungen für üblicherweise über Beutel zugegebene zu verarbeitende Behälter handelt. Ausgangsseitig des Fördertopfes werden die Behälter üblicherweise über eine Zufuhrbahn für die Fördervorrichtung der eingangs beschriebenen Art zugeführt, um dort weiterverarbeitet zu werden. Eine als Fördertopf ausgestaltete Fördervorrichtung ist zum Beispiel in der nicht-vorveröffentlichten Patentanmeldung DE 10 2022 118 875.4 derselben Anmelderin beschrieben.

Behälter in Form von Fläschchen weisen ausgangsseitig des Fördertopfes ohne Einfluss seitens des Benutzers typischerweise zwei unterschiedliche Orientierungen auf, wobei die Ausrichtungen der Fläschchen zufällig verteilt sind. Beispielsweise können Fläschchen mit dem Hals führend oder mit dem Boden führend durch die Zufuhrbahn transportiert werden. Für die Weiterverarbeitung ist es indessen wünschenswert, dass die Behälter eine einheitliche Orientierung aufweisen. Zur Orientierungsänderung der Behälter ist es bekannt, Fördervorrichtungen beispielsweise mit Scheiben, Schnecken, Haken, Pendeln, Weichen oder Fallschächten einzusetzen. Diese Vorrichtungen haben das Ziel, einen falsch ausgerichteten Behälter in die korrekte Orientierung zu bringen.

Insbesondere pharmazeutische Behälter können eine hohe Variantenvielfalt aufweisen. Die Behälter können sich zum Beispiel in ihrer Geometrie und/oder dem Material und infolgedessen in der Schwerpunktlage voneinander unterscheiden. Wünschenswert ist es dementsprechend, über eine Fördervorrichtung Behälter unterschiedlicher Ausgestaltung verarbeiten zu können. Von Vorteil ist es ferner, wenn eine Verarbeitung bei verschiedenartigen Einflussgrößen in Bezug auf Temperatur, Luftfeuchte, möglicher elektrostatischer Aufladung der Behälter infolge des Materials und Oberflächenbeschaffenheit der Behälter möglich ist.

Die DE 37 09 933 A1 beschreibt eine Fördervorrichtung für insbesondere pharmazeutische Behälter aus einem Kunststoffmaterial, umfassend eine Statoreinrichtung mit einer Übergabeöffnung für die Behälter die aufeinanderfolgend über eine Zufuhrbahn in einer Zufuhrrichtung insbesondere unausgerichtet zuführbar sind, und eine Rotoreinrichtung, die einen an der Statoreinrichtung um eine Drehachse drehbaren Drehkörper und eine Antriebseinheit für den Drehkörper umfasst,wobei der mindestens eine Drehkörper mindestens eine Aufnahme für einen Behälter umfasst, die in einer Übergabeposition mit der Übergabeöffnung fluchtet,und wobei die Statoreinrichtung eine Abgabeöffnung im Abstand zur Übergabeöffnung umfasst, der der Behälter durch Rotation des mindestens einen Drehkörpers zuführbar ist.

Die JP 2004 203524 A zeigt eine Vorrichtung, die Artikel mit unterschiedlich großen Durchmesserabschnitten vereinzelt dreht und über eine Auswahlmechanik so ausrichtet, dass stets der kleinere Abschnitt nach unten fällt. So wird eine einheitliche Orientierung aller Artikel erzielt.

Aufgabe der vorliegenden Erfindung ist es, eine Fördervorrichtung bereitzustellen, die eine verbesserte Verarbeitung von insbesondere pharmazeutischen Behältern ermöglicht.

Diese Aufgabe wird durch eine erfindungsgemäße Fördervorrichtung für insbesondere pharmazeutische Behälter aus einem Kunststoffmaterial gelöst, umfassend eine Statoreinrichtung mit einer Übergabeöffnung für die Behälter, die aufeinanderfolgend über eine Zufuhrbahn in einer Zufuhrrichtung insbesondere unausgerichtet zuführbar sind, und eine Rotoreinrichtung, die einen an der Statoreinrichtung um eine Drehachse drehbaren Drehkörper und eine Antriebseinheit für den Drehkörper umfasst, wobei der mindestens eine Drehkörper mindestens eine Aufnahme für den Behälter umfasst, die in einer Übergabeposition mit der Übergabeöffnung fluchtet, und wobei die Statoreinrichtung eine Abgabeöffnung im Abstand zur Übergabeöffnung umfasst, der der Behälter durch Rotation des mindestens einen Drehkörpers zuführbar ist, ein Führungselement für den Behälter in Richtung der Abgabeöffnung, in Form einer sich in Richtung der Abgabeöffnung verjüngenden Führungsbahn, und Anlageelemente für den Behälter an einander gegenüberliegenden Seiten der Abgabeöffnung, wobei die Führungsbahn eine Vertiefung aufweist, in die der Behälter bei der Rotation des mindestens einen Drehkörpers eingreift, und wobei die Anlageelemente durch einen relativ zur Vertiefung erhöhten Rand der Abgabeöffnung gebildet sind.

Bei der erfindungsgemäßen Fördervorrichtung werden die zu verarbeitenden Behälter, beispielsweise pharmazeutische Fläschchen aus einem Kunststoffmaterial, der Übergabeöffnung an der Statoreinrichtung vorzugsweise über eine Zufuhrbahn zugeführt. Die Fläschchen können zum Beispiel eine zufällige Ausrichtung in zwei Orientierungen aufweisen. Die Zufuhrbahn kann zum Beispiel an einen Auslauf eines Fördertopfes angeschlossen sein. Die Behälter können abhängig von ihrer Beschaffenheit zum Beispiel "auf Stau" zugeführt werden, wobei nachfolgende Behälter einen vorausgehenden Behälter in der Zufuhrbahn und/oder in die Übergabeöffnung schieben. Über den mindestens einen Drehkörper können die Behälter nacheinander von der Übergabeöffnung zur Abgabeöffnung gefördert werden. Fluchtet die mindestens eine Aufnahme mit der Übergabeöffnung, kann der Behälter in die Aufnahme gelangen. Unter "Flucht" kann vorliegend insbesondere eine Relativanordnung der Übergabeöffnung und der Aufnahme derart verstanden werden, dass der Behälter quer zu seiner Längsrichtung von der Übergabeöffnung in die Aufnahme gelangen kann, wobei die Aufnahme zum Beispiel unterhalb der Übergabeöffnung angeordnet ist. Über das Führungselement wird der Behälter so in Richtung der Abgabeöffnung geführt, dass er bei mit der Abgabeöffnung fluchtender Aufnahme eine gewünschte Solllage einnehmen kann. Unter "Flucht" kann vorliegend insbesondere eine Relativanordnung der Aufnahme und der Abgabeöffnung derart verstanden werden, dass der Behälter von der Aufnahme in die Abgabeöffnung gelangen kann, wobei die Aufnahme zum Beispiel oberhalb der Abgabeöffnung angeordnet ist. Insbesondere bei Fläschchen kann beispielsweise ein Halsabschnitt an einem der Anlageelemente an der Abgabeöffnung anliegen, abhängig von der ursprünglichen Orientierung. Auf den Behälter kann insbesondere ein Kippmoment wirken, so dass er infolgedessen durch die Abgabeöffnung hindurch mit dem Boden voraus und somit in korrekter Sollorientierung über die Abgabeöffnung ausgegeben werden kann.

Das Führungselement ist erfindungsgemäß eine Führungsbahn, die sich in Richtung der Abgabeöffnung verjüngt und dadurch den Behälter führt.

Eine Achse der mindestens einen Aufnahme ist vorzugsweise parallel zu der Drehachse des mindestens einen Drehkörpers ausgerichtet und/oder parallel zur Ausrichtung der Übergabeöffnung, die vorzugsweise mit der Zufuhrrichtung fluchtet.

Die Abgabeöffnung weist vorzugsweise einen kleineren Öffnungsquerschnitt auf als die Übergabeöffnung.

Quer zur Überführungsrichtung in die mindestens eine Aufnahme weist die Übergabeöffnung beispielsweise einen länglichen Querschnitt auf. Quer zur Überführungsrichtung von der mindestens einen Aufnahme in die Abgabeöffnung weist die Abgabeöffnung beispielsweise einen eher rechteckigen Querschnitt auf.

Das Führungselement kann beispielsweise eine Kulissenführung sein oder umfassen. Ein Rand der Führungsbahn kann zum Beispiel eine Kulisse für den Behälter bilden, an der der Behälter anliegt und in Richtung der Abgabeöffnung geführt ist.

Das Führungselement, insbesondere die Führungsbahn, ist vorzugsweise entlang einer Innenumfangsfläche einer den mindestens einen Drehkörper aufnehmenden Aufnahmeöffnung der Statoreinrichtung angeordnet. An der Statoreinrichtung kann der Behälter zum Beispiel anliegen, während er bei der Rotation des Drehkörpers in der Aufnahme positioniert ist.

Das Führungselement kann sich beispielsweise ausgehend von der Übergabeöffnung erstrecken.

Alternativ oder ergänzend kann das Führungselement bis zur Abgabeöffnung erstreckt sein.

Das Führungselement, insbesondere die Führungsbahn, weist vorteilhafterweise zumindest abschnittsweise eine kontinuierliche Verjüngung auf. Abrupte Verjüngungen an dem Führungselement, die zu einem möglichen Verkanten des Behälters führen könnten, können auf diese Weise vermieden werden.

Vorgesehen sein kann, dass das Führungselement, insbesondere die Führungsbahn, über seine bzw. ihre Erstreckung nur abschnittsweise eine Verjüngung aufweist.

Die Verjüngung kann zum Beispiel konisch sein.

Vorzugsweise verjüngt sich die Führungsbahn an zwei längs der Drehachse gegenüberliegenden Seiten, zum Beispiel V-förmig.

Die Anlageelemente liegen einander beispielsweise parallel zur Zufuhrrichtung gegenüber.

Vorgesehen sein kann insbesondere, dass die Orientierung des Behälters während des Transports in der mindestens einen Aufnahme von der Übergabeöffnung zur Abgabeöffnung nicht verändert wird. Beispielsweise ist der Behälter in der Übergabeöffnung in der Zufuhrrichtung ausgerichtet und gelangt in dieser Orientierung in die mindestens Aufnahme, wobei der Behälter die Orientierung bis zur Abgabeöffnung beibehält.

Die Führungsbahn weist eine Vertiefung auf, in die der Behälter bei der Rotation des mindestens einen Drehkörpers eingreift, wobei die Anlageelemente durch einen relativ zur Vertiefung erhöhten Rand der Abgabeöffnung gebildet sind. Ein Halsabschnitt eines Behälters kann zum Beispiel auf dem Rand aufliegen, wodurch der Behälter in die Abgabeöffnung kippt oder wodurch die Kippbewegung unterstützt wird.

Die Übergabeöffnung ist vorteilhafterweise bezogen auf eine Höhenrichtung oberhalb der Abgabeöffnung angeordnet. Insbesondere kann die Übergabeöffnung in der Schwerkraftrichtung direkt oberhalb der Abgabeöffnung angeordnet sein.

Ein Winkelabstand der Übergabeöffnung und der Abgabeöffnung voneinander, bezogen auf die Drehachse, kann beispielsweise 180° betragen, insbesondere bei der zuletzt erwähnten vorteilhaften Ausführungsform.

Günstig ist es, wenn der Behälter unter Schwerkrafteinfluss von der Übergabeöffnung in die mindestens eine Aufnahme gelangt und/oder von der mindestens einen Aufnahme in die Abgabeöffnung.

Bei einer vorteilhaften Ausführungsform der Erfindung ist es günstig, wenn der mindestens eine Drehkörper ein Zylinder ist oder einen Zylinder umfasst, wobei ein in der Übergabeöffnung angeordneter Behälter an einem Mantel des Zylinders anliegt, bis die mindestens eine Aufnahme mit der Übergabeöffnung fluchtet. Dadurch kann eine konstruktiv einfache Ausgestaltung der Fördervorrichtung erzielt werden. Der Mantel des Zylinders kann den Behälter in der Übergabeöffnung zurückhalten. Erst bei mit der Übergabeöffnung fluchtender Aufnahme gelangt der Behälter in die Aufnahme, vorzugsweise fallend unter Schwerkrafteinfluss.

Der Drehkörper kann bei der vorstehend erwähnten Ausführungsform auch als walzenförmig angesehen werden, zumindest abschnittsweise.

Der Zylinder ist beispielsweise ein senkrechter Kreiszylinder.

Die Fördervorrichtung umfasst vorzugsweise einen sich an die Abgabeöffnung anschließenden Fallschacht für den Behälter. Durch den Fallschacht hindurch kann der Behälter unter Schwerkrafteinfluss fallen und dadurch konstruktiv einfach der weiteren Verarbeitung zugeführt werden. Der Fallschacht ist zum Beispiel durch ein Rohr oder ein Hohlprofil gebildet.

Der Fallschacht kann zumindest abschnittsweise durch die Statoreinrichtung gebildet sein.

Der mindestens eine Drehkörper umfasst günstigerweise zwei oder mehr Aufnahmen, wodurch eine erhöhte Anzahl von Behältern mittels der Fördervorrichtung verarbeitet werden kann.

Die Aufnahmen können in Umfangsrichtung der Drehachse vorteilhafterweise gleiche Winkelabstände voneinander aufweisen.

Wie eingangs erläutert, besteht zum Beispiel die Möglichkeit, dass die Behälter "auf Stau" zugeführt werden, wobei ein vorauseilender Behälter durch nachfolgende Behälter in die Übergabeöffnung geschoben werden kann.

Als günstig kann es sich erweisen, wenn die Übergabeöffnung eine Durchgangsöffnung der Statoreinrichtung ist und wenn die Fördervorrichtung ein mit dem mindestens einen Drehkörper gekoppeltes Anschlagelement umfasst, wobei ein zugeführter Behälter bis zum Kontakt mit dem Anschlagelement in der Übergabeöffnung bewegbar ist. Der Behälter wird mittels des auf ihn ausgeübten Staudruckes zum Beispiel solange in die Übergabeöffnung geschoben, bis er das Anschlagelement kontaktiert.

Vorzugsweise weicht das Anschlagelement unter der Rotation des mindestens einen Drehkörpers relativ zur Übergabeöffnung zurück. Dadurch kann der Behälter in der Übergabeöffnung hinreichend Spiel aufweisen, so dass er, zum Beispiel unter Schwerkrafteinfluss, in die mit der Übergabeöffnung fluchtende Aufnahme gelangen kann. Ein nachfolgender Behälter kann beispielsweise mittels eines Sperrelementes wie nachfolgend erläutert zurückgehalten werden.

Das "Zurückweichen" kann vorliegend insbesondere infolge der Form oder Kontur des Anschlagelementes erfolgen, das bei der Rotation abschnittsweise in Abstand zur Übergabeöffnung gelangen kann, um so eine weitere Bewegung des Behälters zu ermöglichen.

Alternativ kann das "Zurückweichen" beispielsweise durch eine aktive Bewegung des Anschlagelementes mittels eines Antriebselementes weg von der Übergabeöffnung erfolgen.

Bei einer andersartigen Ausführungsform der Erfindung kann vorgesehen sein, dass der Behälter bei zurückweichendem Anschlagelement unter Schub eines nachfolgenden Behälters weiter in der Zufuhrrichtung in die Übergabeöffnung bewegbar ist, bis er in die mit der Übergabeöffnung fluchtende Aufnahme gelangt. Nachfolgende Behälter können den führenden Behälter weiter in der Zufuhrrichtung bewegen, bis die mindestens eine Aufnahme mit der Übergabeöffnung fluchtet und den Behälter aufnehmen kann.

Das Anschlagelement kann beispielsweise mit dem mindestens einen Drehkörper verbunden oder von diesem gebildet sein.

Beispielsweise ist das Anschlagelement ein Scheibenelement, das den mindestens einen Drehkörper bezogen auf die Drehachse radial überragt und die Übergabeöffnung überdeckt. Beispielsweise wenn der Drehkörper in der vorstehend genannten Aufnahmeöffnung angeordnet ist, kann das Scheibenelement außerhalb der Aufnahmeöffnung angeordnet sein und den Drehkörper radial überragen. Das Scheibenelement ist zum Beispiel an einer Stirnseite des Drehkörpers festgelegt.

Das Anschlagelement kann zum Beispiel ein Höhenprofil aufweisen, das in Richtung auf die Statoreinrichtung eine ansteigende Flanke und eine abfallende Flanke aufweist. Die mindestens eine Aufnahme fluchtet vorzugsweise dann mit der Übergabeöffnung, wenn das Höhenprofil an einem Übergangsbereich von der abfallenden Flanke zur ansteigenden Flanke oder an der abfallenden Flanke an der Übergabeöffnung angeordnet ist. Wenn das Höhenprofil durch Rotation des Drehkörpers an der Übergabeöffnung vorbei bewegt wird, kann das Anschlagelement wie vorstehend erläutert infolge der Rotation zurückweichen und dadurch dem Behälter innerhalb der Übergabeöffnung Spiel verschaffen, so dass der Behälter beispielsweise in die Aufnahme fallen kann, wenn diese mit der Übergabeöffnung fluchtet.

An der ansteigenden Flanke, an einem Übergangsbereich zwischen der ansteigenden Flanke und der abfallenden Flanke und an der abfallenden Flanke nahe dem letztgenannten Übergangsbereich ist der Abstand des Höhenprofils von der Übergabeöffnung demgegenüber geringer, so dass der Behälter zunächst anschlagen und gegen weitere Bewegung in die Übergabeöffnung blockiert werden kann.

Das Höhenprofil ist beispielsweise radial an einem Außenrand des vorstehend genannten Scheibenelementes angeordnet oder gebildet.

Die Fördervorrichtung kann vorzugsweise ein Sperrelement umfassen, über das in einer Fixierstellung ein nachfolgender Behälter in der Übergabeöffnung oder zufuhrseitig der Übergabeöffnung fixierbar ist, wenn der Behälter in die mindestens eine Aufnahme gelangt, und das die nachfolgenden Behälter zur weiteren Bewegung in die Übergabeöffnung in einer Freigabestellung freigibt, wobei das Sperrelement mittels einer Antriebseinheit von der Fixierstellung in die Freigabestellung und/oder umgekehrt überführbar ist. Beispielsweise bei auf Stau zugeführten Behältern kann ein nachfolgender Behälter mittels des Sperrelementes fixiert werden, um diesen zurückzuhalten, wenn der führende Behälter in die mit der Übergabeöffnung fluchtende Aufnahme gelangt. Bei Freigabe über das Sperrelement kann der nachfolgende Behälter weiter in die Übergabeöffnung gelangen und nachfolgend verarbeitet werden. Dem führenden Behälter kann zum Beispiel wie vorstehend erläutert über das zurückweichende Anschlagelement Spiel verschafft werden.

Die Fördervorrichtung kann beispielsweise eine Steuereinrichtung umfassen, über die die Antriebseinheit für den mindestens einen Drehkörper und die Antriebseinheit für das Sperrelement synchronisiert sind. Auf diese Weise kann sichergestellt werden, dass die Arbeitstakte des mindestens einen Drehkörpers und des Sperrelementes so aufeinander abgestimmt sind, dass die Behälter zuverlässig verarbeitet werden können.

Beispielsweise ist vorgesehen, dass mittels einer beispielsweise optisch ausgestalteten Sensoreinrichtung festgestellt werden kann, dass der Behälter das Anschlagelement kontaktiert. Ist dies der Fall, kann die Antriebseinheit aktiviert werden, um das Sperrelement in die Fixierstellung zu überführen und den folgenden Behälter zu fixieren. Dem erstgenannten Behälter kann Spiel zur Übergabe in die Aufnahme verschafft werden.

Nimmt das Sperrelement die Fixierstellung ein, fluchtet die Aufnahme bei einer bevorzugten Ausführungsform noch nicht mit der Übergabeöffnung, sondern beispielsweise erst nach Drehung des Drehkörpers um die Drehachse für einen vorgegebenen oder vorgebbaren Drehwinkel.

Für das Sperrelement kann beispielsweise eine pneumatisch ausgestaltete Antriebseinheit zum Einsatz kommen, die ein Kopplungselement betätigt (beispielsweise einen Stößel oder Hebel), das mit dem Sperrelement gekoppelt ist, um diesen von der Fixierstellung in die Freigabestellung und/oder umgekehrt zu bewegen.

Das Sperrelement kann bei einer bevorzugten Ausführungsform der Erfindung zum Beispiel ein Klemmelement sein, über das der nachfolgende Behälter an einem Rand der Übergabeöffnung verklemmbar ist.

Die Antriebseinheit für den mindestens einen Drehkörper kann zum Beispiel eine elektrische Antriebseinheit sein oder umfassen. Zum Beispiel kommt ein Schrittmotor oder Servomotor zum Einsatz, dessen Antriebskraft direkt oder indirekt, zum Beispiel über ein Getriebe, auf den mindestens einen Drehkörper übertragen werden kann.

Wie erwähnt umfasst die erfindungsgemäße Fördervorrichtung mindestens einen Drehkörper, wobei eine Mehrzahl von Drehkörpern vorgesehen sein kann.

Die Fördervorrichtung umfasst bei einer bevorzugten Ausführungsform jeweils zwei oder mehr Drehkörper, Übergabeöffnungen, Abgabeöffnungen und Führungselemente (vorzugsweise optional Scheibenelemente und/oder Sperrelemente), wobei jedem Drehkörper eine Übergabeöffnung, eine Abgabeöffnung und ein Führungselement zugeordnet sind. Dadurch kann eine erhöhte Zahl von Behältern mittels der Fördervorrichtung verarbeitet werden. Die Behälter können beispielsweise über parallel angeordnete Zufuhrbahnen zugeführt und seitlich nebeneinander, oberhalb voneinander oder unterhalb voneinander verarbeitet werden. Vorzugsweise können die Drehkörper denselben Arbeitstakt aufweisen und/oder synchron betrieben werden.

Als vorteilhaft erweist es sich, wenn die Drehkörper gemeinsam mittels einer Antriebseinheit antreibbar sind. Gesonderte Antriebseinheiten können dadurch eingespart werden. Zum Beispiel kann eine Antriebseinheit ein Getriebe antreiben, das mit zwei oder mehr Drehkörpern in Wirkverbindung steht.

Die Fördervorrichtung kann eine Statoreinrichtung umfassen, von denen die Übergabeöffnungen, Abgabeöffnungen und Führungselemente gebildet sind und die gemeinsam mit den zwei oder mehr Drehkörpern zum Einsatz kommt. Gesonderte Statoreinrichtungen können zum Beispiel eingespart werden.

Von Vorteil ist es, wenn die Fördervorrichtung eine Mehrzahl von Formatsätzen umfasst, die sich hinsichtlich ihrer behälterspezifischen Eigenschaften voneinander unterscheiden, wobei ein jeweiliger Formatsatz mindestens eines aus der Menge von Statoreinrichtung, Drehkörper, Anschlagelement oder Sperrelement umfasst. Über die Formatsätze besteht eine konstruktiv einfache Möglichkeit der Anpassung der Fördervorrichtung an unterschiedliche zu verarbeitende Behälter. Beispielsweise kann ein verhältnismäßig einfacher Umbau der Fördervorrichtung durch Einsatz unterschiedlicher Formatteile für die Statoreinrichtung, den Drehkörper und das Anschlagelement vorgenommen werden. Die Fördervorrichtung weist dadurch eine hohe Vielseitigkeit auf.

Für eine vorzugsweise konstruktiv einfache Ausgestaltung kann es günstig sein, wenn die Statoreinrichtung zwei in einer Gebrauchsstellung direkt oder indirekt miteinander verbundene und insbesondere lösbar miteinander verbundene Statorteile umfasst, die gemeinsam die Übergabeöffnung, eine Aufnahmeöffnung für den mindestens einen Drehkörper und die Abgabeöffnung bilden.

Die Statorteile können beispielsweise zumindest abschnittsweise plattenförmig ausgestaltet sein und in der Gebrauchsstellung über jeweilige Anlageflächen vorzugsweise planar aneinander anliegen. Eine Normale der Anlageflächen ist beispielsweise längs der Zufuhrrichtung ausgerichtet.

Günstig kann es sein, wenn die Fördervorrichtung eine Halteeinrichtung umfasst und mindestens ein mit der Halteeinrichtung verbundenes oder von dieser gebildetes Halteteil, wobei das mindestens eine Halteteil mit einem ersten Statorteil, das im Abstand zur Halteeinrichtung positioniert ist, verbunden ist, und ein zweites Statorteil zwischen der Halteeinrichtung und dem ersten Statorteil angeordnet ist und mindestens eine Durchgangsöffnung umfasst, durch die das mindestens eine Halteteil hindurchgreift. Dies bietet zum Beispiel die Möglichkeit, das zweite Statorteil über das erste Statorteil am mindestens einen Halteteil und dadurch an der Halteeinrichtung zu fixieren.

Die Halteeinrichtung kann zum Beispiel mit einem Unterbau oder Gestell für die Fördervorrichtung verbunden sein.

Das erste Statorteil ist am mindestens einen Halteteil vorzugsweise lösbar festlegbar. Günstigerweise sind korrespondierende Magnetelemente am ersten Statorteil und am mindestens einen Halteteil vorgesehen, um eine unter dem Gesichtspunkt der Reinigung eine pharmazeutisch saubere sowie eine benutzerfreundliche Handhabung der Fördervorrichtung zu ermöglichen.

Das zweite Statorteil ist vorzugsweise frei von einer Verbindung mit der Halteeinrichtung und über das erste Statorteil daran fixiert.

Mindestens ein Halteteil kann die mindestens eine Durchgangsöffnung am zweiten Statorteil beispielsweise mit Spiel durchgreifen und dadurch eine Bewegung des zweiten Statorteils relativ zum ersten Statorteil und/oder zur Halteeinrichtung in der Gebrauchsstellung der Statorteile zueinander ermöglichen. Dadurch kann, zumindest teilweise, eine Art schwimmende Lagerung des zweiten Statorteils ermöglicht werden. Es zeigt sich in der Praxis, dass auf diese Weise ein verkantungsfreier Betrieb der Fördervorrichtung begünstigt wird. Wenn die Statorteile beispielsweise die Übergabeöffnung, die Abgabeöffnung und/oder die Aufnahmeöffnung für den Drehkörper gemeinsam ausbilden, kann das zweite Statorteile bei bestehender oder drohender Verkantung im Rahmen des bestehenden Spiels etwas bewegt werden und die Verkantung vermieden oder aufgehoben werden.

Es können zwei oder mehr Halteteile vorgesehen sein.

Bei der bevorzugten Umsetzung der Erfindung kann das Halteteil zum Beispiel zapfenförmig ausgestaltet sein und durch die Durchgangsöffnung hindurchgreifen. Stirnseitig kann mindestens ein Magnetelement zum Zusammenwirken mit einem korrespondierenden Magnetelement des ersten Statorteils vorgesehen sein.

Das erste Statorteil und das zweite Statorteil können beispielsweise miteinander in Eingriff stehen, wobei ein Vorsprung am ersten Statorteil in eine Aufnahme des zweiten Statorteils eingreift, oder umgekehrt. Der Eingriff kann spielbehaftet sein. In entsprechender Weise kann das Halteteil mit Spiel durch die Durchgangsöffnung hindurchgreifen. Das Halteteil kann einteilig oder mehrteilig ausgestaltet sein.

Günstig ist es, wenn die Statoreinrichtung und/oder der mindestens eine Drehkörper zerstörungsfrei sterilisierbar und/oder zerstörungsfrei mittels einer Reinigungsflüssigkeit, insbesondere Wasser, abwaschbar ist. Dadurch weist die Fördervorrichtung ein vorteilhaftes Reinigungsverhalten auf.

Die nachfolgende Beschreibung einer bevorzugten Ausführungsform der Erfindung dient im Zusammenhang mit der Zeichnung der näheren Erläuterung der Erfindung. Es zeigen:
Figur 1: eine schematische Darstellung einer Maschine zum Verarbeiten von insbesondere pharmazeutischen Behältern, die eine erfindungsgemäße Fördervorrichtung in bevorzugter Ausführungsform umfasst;
Figur 2: eine Teildarstellung der Fördervorrichtung aus Figur 1 in einer perspektivischen Explosionsansicht;
Figur 3: eine vergrößerte Darstellung von zwei Statorteilen der Fördervorrichtung in einer perspektivischen Explosionsansicht;
Figur 4: eine perspektivische Darstellung eines scheibenförmigen Anschlagelementes der Fördervorrichtung;
Figur 5: eine Vorderansicht der Fördervorrichtung zu einem ersten Zeitpunkt beim Verarbeiten der Behälter;
Figur 6: eine Schnittansicht längs der Linie 6-6 in Figur 5;
Figur 7: eine Darstellung entsprechend Figur 6 zu einem späteren Zeitpunkt beim Verarbeiten der Behälter;
Figur 8: eine Darstellung entsprechend Figur 7 unter Ausblendung eines Drehkörpers der Fördervorrichtung;
Figur 9: eine Darstellung zu einem späteren Zeitpunkt beim Verarbeiten der Behälter, erneut unter Ausblendung des Drehkörpers;
Figur 10: eine Vorderansicht der Fördervorrichtung zu einem späteren Zeitpunkt beim Verarbeiten der Behälter unter Ausblendung eines scheibenförmigen Anschlagelementes;
Figur 11: eine Schnittansicht längs der Linie 11-11 in Figur 10, wobei das Anschlagelement dargestellt ist;
Figur 12: eine Darstellung entsprechend Figur 11 zu einem späteren Zeitpunkt beim Verarbeiten der Behälter;
Figur 13: eine Schnittansicht längs der Linie 13-13 in Figur 5; und
Figur 14: eine vergrößerte Darstellung von Magnetelementen der Fördervorrichtung.

Nachfolgend wird unter Verweis auf die Zeichnung auf eine insgesamt mit dem Bezugszeichen 100 belegte vorteilhafte Ausführungsform der erfindungsgemäßen Fördervorrichtung eingegangen. Im vorliegenden Fall wird die Fördervorrichtung 100 zum Fördern von Behältern 102 eingesetzt. Die Behälter 102 sind im vorliegenden Ausführungsbeispiel pharmazeutische Behälter 102, insbesondere Fläschchen 104, die zum Beispiel aus einem Kunststoffmaterial gefertigt sind. Die Fläschchen 104 weisen einen Bauchabschnitt 106 und einen Halsabschnitt 108 auf.

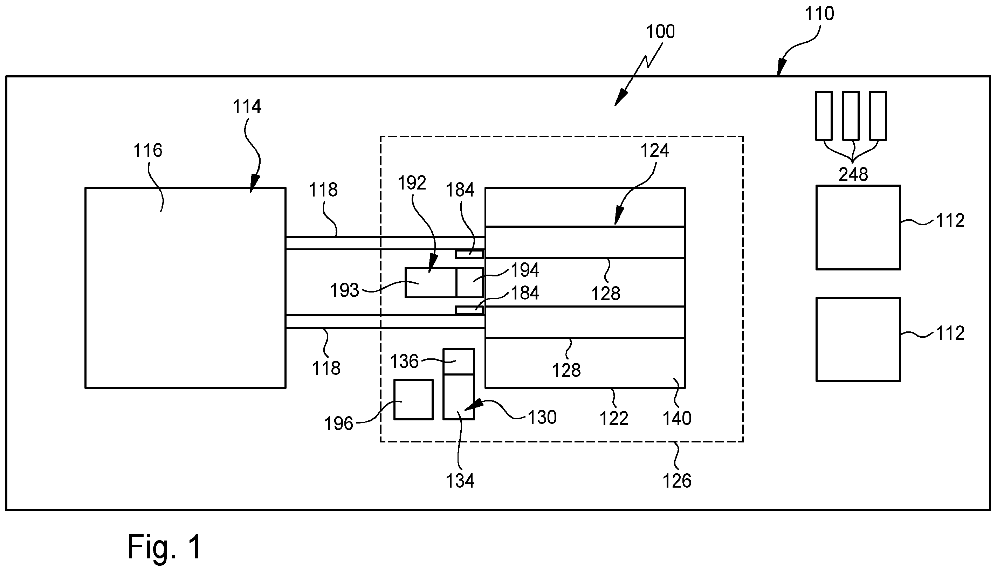

Figur 1 zeigt die Fördervorrichtung 100 als Bestandteil einer Maschine 110 zum Verarbeiten der Behälter, wobei die Maschine 110 mindestens eine Verarbeitungsstation 112 umfasst.

Die Fördervorrichtung 110 ist in Verarbeitungsrichtung einer weiteren Fördervorrichtung 114 nachgelagert angeordnet, die einen sogenannten Fördertopf 116 umfasst.

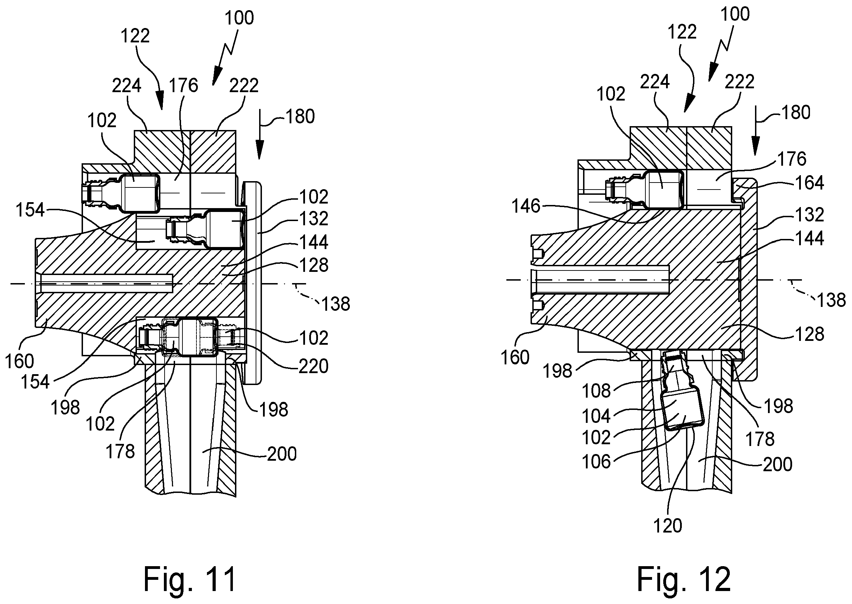

An den Fördertopf schließt sich ausgangsseitig mindestens eine Zufuhrbahn 118 an. Behälter 102 werden üblicherweise über Beutel in den Fördertopf 116 eingebracht und von diesem gerichtet an die Zufuhrbahn 118 übergeben. Dabei können die Behälter 102 zwei einander entgegengesetzte Orientierungen aufweisen. Zum einen kann, wie in der Zeichnung dargestellt, ein Boden 120 des Behälters 102 führend sein. Zum anderen kann, dies ist vorliegend lediglich in Figur 11 schematisch dargestellt, der Halsabschnitt 108 des Behälters 102 führend angeordnet sein.

Wie nachfolgend im Einzelnen erläutert wird, umfasst die Fördervorrichtung 100 eine Statoreinrichtung 122, eine Rotoreinrichtung 124 und eine Halteeinrichtung 126. Die Halteeinrichtung 126 dient beispielsweise dazu, die Fördervorrichtung 100 an einem Unterbau oder Gestell der Maschine 110 festzulegen und insbesondere, um die Statoreinrichtung 122 und die Rotoreinrichtung 124 zu halten.

Die Rotorreinrichtung 124 umfasst mindestens einen Drehkörper 128, eine Antriebseinheit 130 für den Drehkörper 128 und ein Anschlagelement 132.

Im vorliegenden Fall ist die Fördervorrichtung 100 vorteilhafterweise zweistellig ausgestaltet. Es besteht dabei die Möglichkeit, gleichzeitig Behälter 102 zu verarbeiten, die vom Fördertopf 116 über zwei Zufuhrbahnen 118 zugeführt werden.

Zur Verarbeitung umfasst die Fördervorrichtung 100 daher mehr als einen Drehkörper 128, insbesondere zwei Drehkörper 128 für den zweistelligen Betrieb.

Die Funktionsweise der Drehkörper 128 sowie der entsprechenden Komponenten der Statoreinrichtung 122 unterscheidet sich jedoch nicht voneinander, so dass nachfolgend nur auf die Funktionsweise eines Drehkörpers 128 zusammen mit der Statoreinrichtung 122 eingegangen wird. Die diesbezüglichen Erläuterungen gelten in entsprechender Weise für den anderen Drehkörper 128.

Die Statoreinrichtung 122 ist vorliegend so ausgebildet, dass sie beide Drehkörper 128 aufnimmt und keine gesonderten Statoreinrichtungen 122 vorgesehen sein müssen.

Bei der Fördervorrichtung 100 ist es vorteilhaft, dass die Antriebseinheit 130 beiden Drehkörpern 128 zugeordnet ist. Gesonderte Antriebseinheiten 130 für die Drehkörper 128 können dadurch vermieden werden.

Die Antriebseinheit 130 ist beispielsweise elektrisch ausgestaltet und umfasst einen Servomotor oder Schrittmotor 134. Der Motor 134 kann mit dem jeweiligen Drehkörper 128 über ein in Figur 1 schematisch dargestelltes Getriebe 136 in Wirkverbindung stehen, um den jeweiligen Drehkörper 128 um eine Drehachse 138 drehend anzutreiben.

Hierbei kommt zum Beispiel ein Riemengetriebe 136 zum Einsatz, das direkt oder indirekt an der Halteeinrichtung 126 gehalten sein kann. Über einen Riemen können Antriebselemente, die mit den Drehkörpern 128 in Wirkverbindung stehen, gemeinsam zum Antreiben der Drehkörper 128 angetrieben werden. Denkbar ist ein gleicher oder entgegengesetzter Drehsinn der Drehkörper 128. Anstelle des Riemengetriebes 126 kann auch ein andersartiges Getriebe eingesetzt werden.

Beispielweise ist der Antriebsmotor in einem Unterbau der Maschine 110 angeordnet. Das Getriebe 136 kann zum Beispiel unterhalb der Zufuhrbahnen 118 positioniert sein.

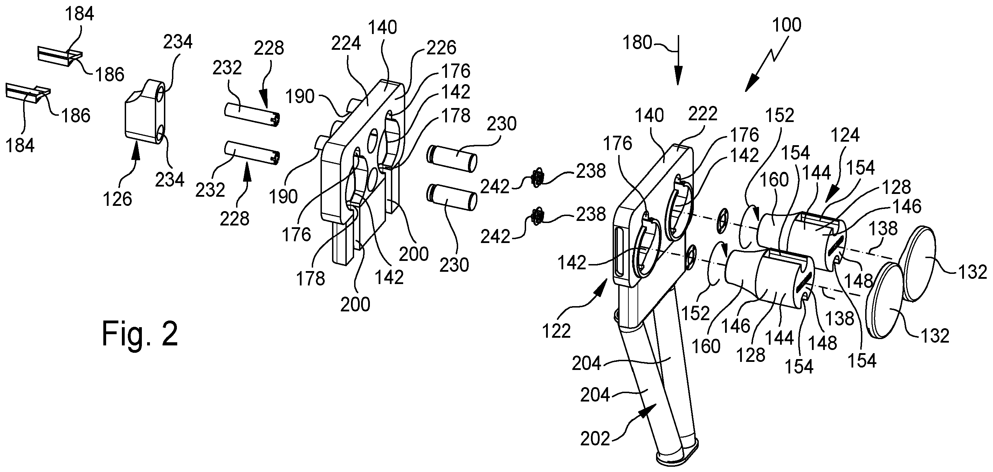

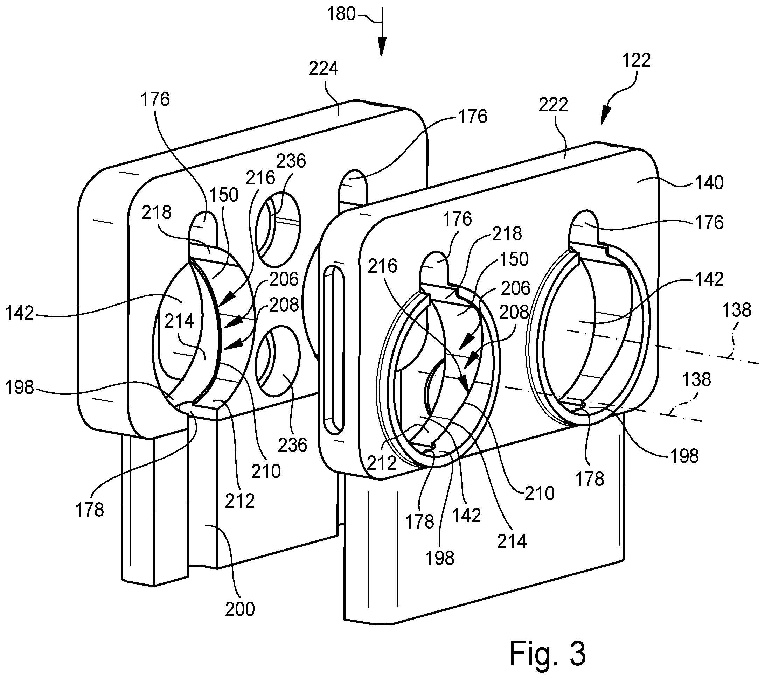

Wie insbesondere aus den Figuren 2 und 3 hervorgeht, bildet die Statoreinrichtung 122 eine Umhausung 140 für den (die) Drehkörper 128. Sie bildet eine Aufnahmeöffnung 142, deren Achse mit der Drehachse 138 fluchtet. Der Drehkörper 128 ist in die Aufnahmeöffnung 142 eingesetzt. Vorliegend ragt der Drehkörper 128 an der dem Getriebe 136 zugewandten hinteren Seite über die Statoreinrichtung 122 hinaus. Auch in der gegenüberliegenden Richtung nach vorne ragt der Drehkörper 128 über die Statoreinrichtung 122 hinaus.

Zumindest innerhalb des in der Aufnahmeöffnung 142 angeordneten Abschnittes ist der Drehkörper 128 vorzugsweise als Zylinder 144 ausgestaltet, dessen Achse mit der Drehachse 138 fluchtet. Der Zylinder 144 umfasst am Außenumfang einen Mantel 146 und vorne eine Stirnseite 148.

Der Drehkörper 128 ist vorliegend so bemessen, dass der Zylinder 144 in der Aufnahmeöffnung 142 formschlüssig aufgenommen, aber unter der Wirkung der Antriebseinheit 130 um die Drehachse 138 drehbar ist. Dabei bewegt sich der Zylinder 144 entlang einer Innenumfangsfläche 150. Ein Pfeil 152 kennzeichnet die Drehrichtung des Drehkörpers 128. Vorgesehen sein kann, dass die Drehrichtung 152 in der entgegengesetzten Richtung verläuft oder auch umkehrbar ist.

Der Drehkörper 128 weist am Zylinder 144 mindestens eine Aufnahme 154 für einen Behälter 102 auf. Vorliegend sind zwei Aufnahmen 154 vorgesehen, die einander in Bezug auf die Drehachse 138 diametral gegenüberliegen.

Die Aufnahmen 154 sind als nutförmige und in Richtung der Stirnseite 148 vorne geöffnete Ausnehmungen 156 gebildet. Eine Achse 158 der Aufnahme 154 ist parallel zur Drehachse 138 ausgerichtet. Auch an der an der Stirnseite 148 abgewandten hinteren Seite des Zylinders 144 ist die Aufnahme 154 geöffnet.

In Richtung des Getriebes 136 schließt sich an den Zylinder 144 ein Befestigungsabschnitt 160 an, der mit dem Getriebe 136 gekoppelt ist.

Die Rotoreinrichtung 124 umfasst ferner einem jeweiligen Drehkörper 128 zugeordnet das Anschlagelement 132. Vorliegend ist das Anschlagelement 132 ein Scheibenelement 162, das an der Stirnseite 148 vorzugsweise lösbar festgelegt ist.

In radialer Richtung bezogen auf die Drehachse 138 ragt das Scheibenelement 162 über den Zylinder 144 hinaus. Der Statoreinrichtung 122 zugewandt weist das Scheibenelement 162 radial außenseitig einen Anschlagabschnitt 164 auf.

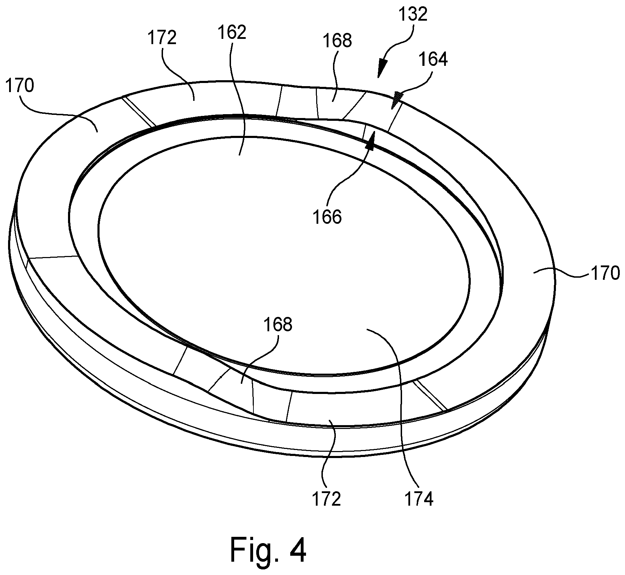

Wie insbesondere aus den Figuren 4 sowie 6 bis 9, 11 und 12 hervorgeht, ist der Anschlagabschnitt 164 nicht planar. Stattdessen weist der Anschlagabschnitt 164 ein sich in axialer Richtung veränderndes Höhenprofil 166 auf. Infolge des Höhenprofils 166 kann der Anschlagabschnitt 164 relativ zur Übergabeöffnung 176 zurückweichen, wenn sich der Drehkörper 128 dreht.

Das Höhenprofil 166 umfasst im vorliegenden Beispiel in der Drehrichtung 152 mindestens eine ansteigende Flanke 168 und mindestens eine abfallende Flanke 170. Vorliegend sind entsprechend der Anzahl der Aufnahmen 154 zwei ansteigende Flanken 168 und zwei abfallende Flanken 170 jeweils gegenüberliegend vorhanden.

Während vorliegend die Flanke 168 verhältnismäßig steil ansteigt, fällt die Flanke 170 demgegenüber verhältnismäßig flach ab.

Zwischen den Flanken 168 und 170 befindet sich ein Übergangsbereich 172 des Anschlagabschnitts 164. Am Übergangsbereich 172 fluchtet das Scheibenelement 162 beispielsweise mit einem der Stirnseite 148 zugewandten mittleren Abschnitt 174 des Scheibenelementes 162.

Beispielsweise ist das Scheibenelement 162 so am Drehkörper 128 angeordnet, dass die Aufnahme 154 dem Übergangsbereich 172 oder der Flanke 170, insbesondere nahe dem Übergangsbereich 172, in axialer Richtung benachbart ist.

Das Scheibenelement 162 ist mit dem Drehkörper 128 drehfest verbunden. Wenn der Drehkörper 128 rotiert, weicht der Anschlagabschnitt 164 an der abfallenden Flanke 170 und am Übergangsbereich 172 gegenüber der Statoreinrichtung 122 zurück. Bei weiterer Drehung wandert der Anschlagabschnitt 164 durch die ansteigende Flanke 168 vor in Richtung der Statoreinrichtung 122. Es versteht sich, dass sich das Zurückweichen und Vorwandern durch das Höhenprofil 166 ergibt, wohingegen das Anschlagelement 132 selbst seinen Abstand relativ zur Statoreinrichtung 122 beibehält.

Die Statoreinrichtung 122 umfasst einem jeweiligen Drehkörper zugeordnet eine Übergabeöffnung 176 und ferner eine jeweilige Abgabeöffnung 178. Die Übergabeöffnung 176 und die Abgabeöffnung 178 liegen einander bezüglich der Drehachse 138 diametral gegenüber. Vorliegend ist die Übergabeöffnung 176 in einer Höhenrichtung oberhalb der Abgabeöffnung 178 angeordnet, insbesondere unmittelbar über dieser in der Schwerkraftrichtung 180.

Positions- und Orientierungsangaben beziehen sich vorliegend auf einen bestimmungsgemäßen Gebrauch der Fördervorrichtung 100.

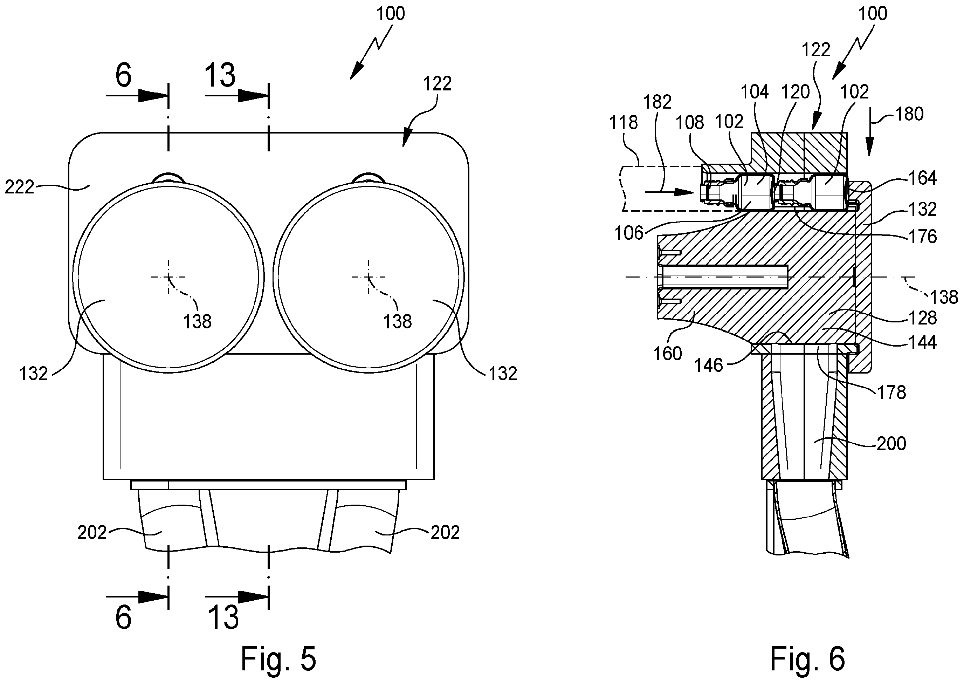

Die Übergabeöffnung 178 erstreckt sich als Durchgangsöffnung durch die Statoreinrichtung 122 hindurch und ist insbesondere vorne dem Anschlagabschnitt 164 zugewandt offen. An der gegenüberliegenden Seite hinten ist die Zufuhrbahn 118 angeordnet. Die Behälter 102 können über die Zufuhrbahn 118 in einer Zufuhrrichtung 182 parallel zur Drehachse 138 zugeführt werden (Figur 6).

Eine Achse der Übergabeöffnung 176 ist parallel zur Achse der Aufnahme 154 und zur Drehachse 138 ausgerichtet.

Im bestimmungsgemäßen Gebrauch kann es insbesondere günstig sein, wenn die Behälter 102 "auf Stau" zugeführt werden, wobei ein führender Behälter 102 von nachfolgenden Behältern 102 geschoben wird. Es besteht dementsprechend ein Staudruck in der Kette von aufeinanderfolgenden Behältern 102.

Im vorliegenden Fall ist die Übergabeöffnung 176 günstigerweise so bemessen, dass ein erster Behälter 102 in der Übergabeöffnung 176 Platz findet und ein zweiter Behälter 102 bis zu einem Abschnitt mit dem größten Durchmesser (Figur 6), um mit einem Sperrelement 184 fixiert werden zu können.

An der Übergabeöffnung 176 umfasst die Fördervorrichtung 100 das Sperrelement 184. Das Sperrelement 184 ist vorliegend ein Klemmelement 186, das am Behälter 102 zur Anlage gebracht werden kann, um diesen klemmend an einem Rand der Übergabeöffnung 176 zu fixieren. Zu diesem Zweck ist an der Statoreinrichtung 122 seitlich eine Aussparung 190 angeordnet, in die das Sperrelement 184 eingreift (Figur 2, wobei das Sperrelement 184 in der Explosionsdarstellung im Abstand zur Statoreinrichtung 122 angeordnet ist).

Dem Sperrelement 184 ist eine Antriebseinheit 192 zugeordnet, die in Figur 1 schematisch dargestellt ist. Im vorliegenden Fall umfasst die Antriebseinheit 192 einen pneumatischen Antrieb 193, der auf ein Kopplungselement 194 einwirkt. Das Kopplungselement 194 ist zum Beispiel ein beweglicher Stößel oder Hebel, an dem das Sperrelement 184 festgelegt ist.

Mittels der Antriebseinheit 192 kann das Sperrelement 184 in eine Freigabestellung überführt werden. In der Freigabestellung ist der Behälter 102 freigegeben und kann bei vor ihm liegender freier Übergabeöffnung 176 weiter in diese eingeschoben werden. Von der Freigabestellung kann das Sperrelement 184 in eine Fixierstellung überführt werden, in der der Behälter 102 klemmend fixiert ist.

Günstigerweise sind die Antriebseinheiten 130 für den Drehkörper 128 und 192 für das Sperrelement 184 miteinander synchronisiert. Zu diesem Zweck kann die Fördervorrichtung 100 eine Steuereinrichtung 196 umfassen.

Vorgesehen sein kann, dass die beiden Sperrelemente 184 mittels einer gemeinsamen Antriebseinheit 192 betätigbar sind oder dass gesonderte Antriebseinheiten 192 vorgesehen sind.

Die Abgabeöffnung 178 ist untenseitig an der Statoreinrichtung 122 angeordnet. Ein Querschnitt der Abgabeöffnung 178 quer zur Transferrichtung zu der Aufnahme 154 ist kleiner als bei der Übergabeöffnung 176. Wenn die Übergabeöffnung 176 längserstreckt ausgebildet ist, weist die Abgabeöffnung 178 einen ungefähr rechteckigen Querschnitt auf.

Zwei Anlageelemente 198 liegen einander bezüglich der Abgabeöffnung 178 gegenüber, vorliegend parallel zur Zufuhrrichtung 182 und damit längs der Achse 158 der Aufnahme 154 (siehe beispielsweise Figuren 3 und 11).

Nach unten schließt sich an die Abgabeöffnung 178 ein Fallschacht 200 an, der zunächst in der Statoreinrichtung 122 selbst ausgebildet ist. Untenseitig ist an die Statoreinrichtung 122 ein den Fallschacht 200 fortsetzendes Stützelement 202 angeschlossen, vorliegend in Gestalt eines Rohres 204. Die Behälter 102 können durch die Abgabeöffnung 178 hindurch in den Fallschacht 200 gelangen und werden über diesen der weiteren Verarbeitung zugeführt.

Wie insbesondere aus den Figuren 3, 8 und 9 hervorgeht, weist die Statoreinrichtung 122 ein Führungselement 206 für die transportierten Behälter 102 auf. Das Führungselement 206 ist vorliegend ausgestaltet als Führungsbahn 208, die entlang der Innenumfangsfläche 150 der Aufnahmeöffnung 142 angeordnet ist.

Die Führungsbahn 208 bildet eine Kulisse 210 und weist eine Vertiefung 212 mit einem jeweiligen Rand 214 auf. Die Ränder 214 liegen einander gegenüber und begrenzen die Vertiefung 212 in axialer Richtung.

Im Bereich der Vertiefung 212 ist der Radius der Aufnahmeöffnung 142 größer als am Rand 214.

Die Führungsbahn 208 umfasst eine Verjüngung 216 in Richtung der Abgabeöffnung 178. Der relativ zur Vertiefung 212 hervorstehende Rand 214 bildet jeweils das Anlageelement 198 im Bereich der Abgabeöffnung 178.

Die Führungsbahn 208 erstreckt sich im Wesentlichen über die gesamte Länge von der Übergabeöffnung 176 bis zur Abgabeöffnung 178, im vorliegenden Beispiel mit Ausnahme eines der Übergabeöffnung 176 benachbarten Abschnittes 218 an der Innenumfangsfläche 150.

Der Abschnitt 218 weist in radialer Richtung ungefähr die Erstreckung der Aufnahme 154 auf. Am Abschnitt 218 kann zum Beispiel der Radius der Aufnahmeöffnung 142 größer sein als an der Vertiefung 212, um durch Spiel die Übernahme des Behälters 102 in die Aufnahme 154 zu erleichtern.

Die Verjüngung 216 ist dem Abschnitt 218 nachfolgend bis zur Abgabeöffnung 178 insbesondere kontinuierlich ausgebildet.

Die Verjüngung 216 in Richtung der Übergabeöffnung 176 kann unterschiedlich ausgestaltet sein und ermöglicht die Führung des Behälters 102. Im vorliegenden Beispiel erfolgt die Verjüngung 216 längs der Drehachse 138 an beiden Seiten, im Wesentlichen in V-Form.

Vorgesehen sein kann alternativ, dass längs der Drehachse 138 nur eine einseitige Verjüngung 216 vorgesehen ist, die vorne (dem Anschlagelement 132) zugewandt oder hinten (dem Anschlagelement 132) abgewandt angeordnet ist.

Nachfolgend wird die Funktionsweise der Fördervorrichtung 100 erläutert.

Die auf Stau zugeführten Behälter 102 gelangen vom Fördertopf 116 über die Zufuhrbahn zur Übergabeöffnung 176. Ein führender Behälter 102 (rechts in Figur 6) kann dadurch unter dem Schub der nachfolgenden Behälter 102 bis zum Anschlagabschnitt 164 gelangen. Hierbei überdeckt der Anschlagabschnitt 164 die Übergabeöffnung 176. Der Behälter 102 schlägt beispielsweise an einem Übergangsbereich von der ansteigenden Flanke 168 und der abfallenden Flanke 170 oder an der abfallenden Flanke 170 an, zum Beispiel nahe dem letztgenannten Übergangsbereich.

Die Drehstellung des Drehkörpers 128 ist so eingestellt, dass der Mantel 146 den Behälter 102 solange von unten abstützt, bis er erst nachfolgend in die Aufnahme 154 gelangen kann.

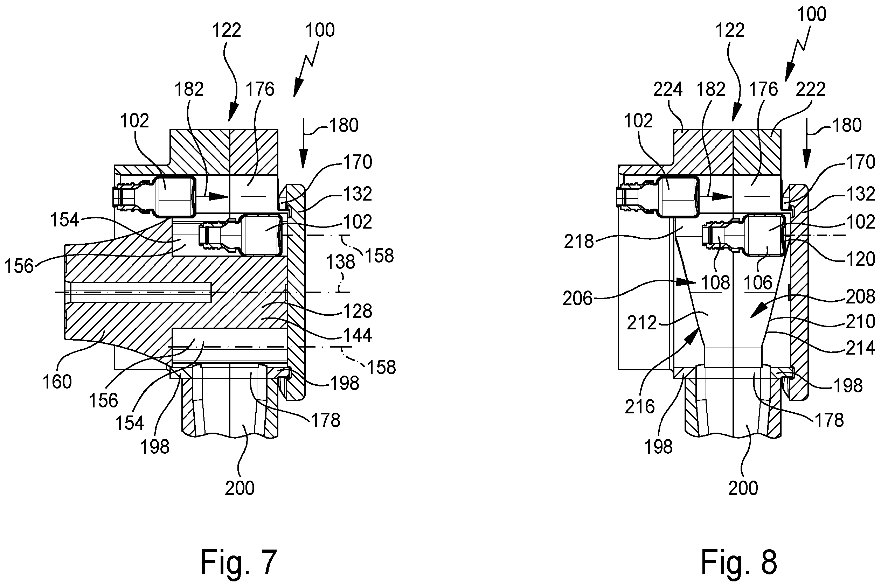

Durch die Rotation des Drehkörpers 128 weicht der Anschlagabschnitt 164 wie vorstehend erläutert in Bezug auf die Übergabeöffnung 176 zurück, so dass dem Behälter 102 Spiel verschafft werden kann. Dabei ist das Höhenprofil 166 am Übergangsbereich 172 oder, nahe dem Übergangsbereich 172, an der abfallenden Flanke 170 an der Übergabeöffnung 176 angeordnet. Wenn die Aufnahme 154 mit der Übergabeöffnung 176 fluchtet, kann der Behälter 102 unter Schwerkrafteinfluss und aufgrund des bestehenden Spiels innerhalb der Übergabeöffnung 176 in die Aufnahme 154 fallen (Figuren 7 und 8).

Das Sperrelement 184 wird vorzugsweise zuvor in die Fixierstellung überführt, um den nachfolgenden Behälter 102 klemmend zu fixieren, wenn der erste Behälter 102 am Anschlagabschnitt 164 anschlägt. Dadurch beaufschlagt der zweite Behälter 102 den ersten Behälter 102 nicht weiter, und diesem kann durch die Drehung des Anschlagelementes 132 Spiel verschafft werden.

Die Figuren 7 und 8 zeigen denselben Zeitpunkt unter Ausblendung des Drehkörpers 128, so dass der Blick auf die Führungsbahn 208 mit der Verjüngung 216 aufgrund des Verlaufes der Ränder 214 freigegeben ist.

Durch nachfolgende Rotation des Drehkörpers 128 wird der Behälter 102 in der Aufnahme 154 entlang der Innenumfangsfläche 150 bewegt. Dabei greift der Behälter 102 in die Vertiefung 212 der Führungsbahn 208 ein und gelangt in Kontakt mit dem Rand 214.

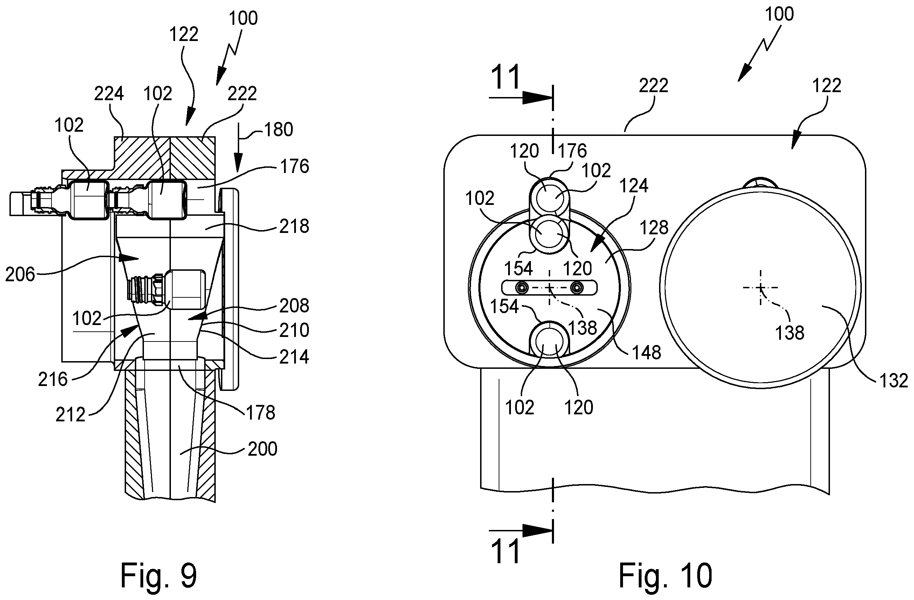

Der Behälter 102 wird über die Führungsbahn 208 zentriert und in Richtung der Abgabeöffnung 178 geführt. Dies ist beispielshaft in Figur 9 dargestellt, wobei der Behälter 102 den Rand 214 mit dem Boden 120 kontaktiert und dadurch axial verschoben wird, während er in der Aufnahme 154 mitgeführt wird.

Die Figur 9 stellt einen Zeitpunkt dar, bei dem die Aufnahme 154 um im Wesentlichen 90° bezüglich der Übergabeöffnung 176 verdreht ist.

Zu diesem Zeitpunkt ist bereits ein weiterer Behälter 102 über die Zufuhrbahn 118 zugeführt worden. Der zweite Behälter 102 ist zwischenzeitlich über das Sperrelement 184 wieder freigegeben worden und kann unter dem Staudruck der folgenden Behälter 102 in die Übergabeöffnung 176 geschoben werden.

Unter weiterer Rotation des Drehkörpers 128 wird der Behälter 102 weiter in Richtung der Abgabeöffnung 178 geführt. Zu dem in den Figuren 10 und 11 gezeigten Zeitpunkt hat der Drehkörper 128 seit der Aufnahme des ersten Behälters 102 eine 180°-Drehung vollzogen. Der erste Behälter 102 gelangt bis zur Abgabeöffnung 178. Der Halsabschnitt 108 kann eines der Anlageelemente 198 kontaktieren. Dadurch wirkt auf den Behälter 102 ein Kippmoment, der mit dem Bauchabschnitt 106 nach unten kippen kann. Der Behälter 102 fällt gekippt mit dem Bauchabschnitt 106 führend unter Schwerkrafteinfluss in den Fallschacht 200 (Figur 12).

Figur 11 zeigt weiter, wie der zweite Behälter 102 in einer der Figur 7 entsprechenden Weise von der Übergabeöffnung 176 unter Schwerkrafteinfluss in die Aufnahme 154 gelangt ist. Zuvor wird der dritte Behälter 102 mittels des Sperrelementes 184 am Rand der Übergabeöffnung 176 klemmend fixiert.

Abweichend von der Darstellung gemäß den Figuren 7 und 8 ist der zweite Behälter 102 im Vergleich zum ersten Behälter 102 in den Figuren 7 und 8 axial in der Aufnahme 154 verschoben. Dies ergibt sich vorliegend dadurch, dass der jeweilige Behälter 102 mit Spiel in der Übergabeöffnung 176 angeordnet ist, so dass sich je nach Lastigkeit beim Fallen in die Aufnahme 154 eine unterschiedliche axiale Position ergeben kann.

Als vorteilhaft erweist es sich, dass mittels der Führungsbahn 208 eine Zentrierung der Behälter 102 relativ zur Abgabeöffnung 178 erfolgen kann. Diese Zentrierung ist unabhängig davon, welche Orientierung die Behälter 102 einnehmen. Bislang wurde der Fall betrachtet, dass der Behälter 102 mit dem Boden 120 führend transportiert wird und der Halsabschnitt 108 das Anlageelement 198 an der dem Anschlagelement 132 abgewandten Seite kontaktiert (Figur 11, links).

Auch bei andersartiger Orientierung des Behälters 102 kann der Halsabschnitt 108 ein Anlageelement 198 kontaktieren, wobei es sich in diesem Fall um das dem Anschlagelement 132 zugewandte Anlageelement 198 handelt (Figur 11, rechts mit dünnerer Kontur 220 des Behälters 102).

Somit ist unabhängig von der Orientierung der Behälter 102 die Möglichkeit über die Fördervorrichtung 100 gegeben, diese in korrekter Solllage über den Fallschacht 200 auszukoppeln, nämlich in aufgerichteter Orientierung.

Nachfolgend wird noch auf die Ausgestaltung insbesondere der Statoreinrichtung 122 eingegangen.

Wie insbesondere aus den Figuren 2, 3 und 13 deutlich wird, umfasst die Statoreinrichtung 122 ein erstes Statorteil 222 und ein zweites Statorteil 224. Die Statorteile 222, 224 sind jeweils im Wesentlichen plattenförmig ausgestaltet und können über einander zugewandte Anlageflächen 226 planar aneinander anliegen, um die Umhausung 140 auszubilden.

Die Aufnahmeöffnung 142 und die Öffnungen 176, 178 werden jeweils hälftig von den Statorteilen 222, 224 ausgebildet. Entsprechendes gilt für die Fallschächte 200 (Figuren 2 und 3).

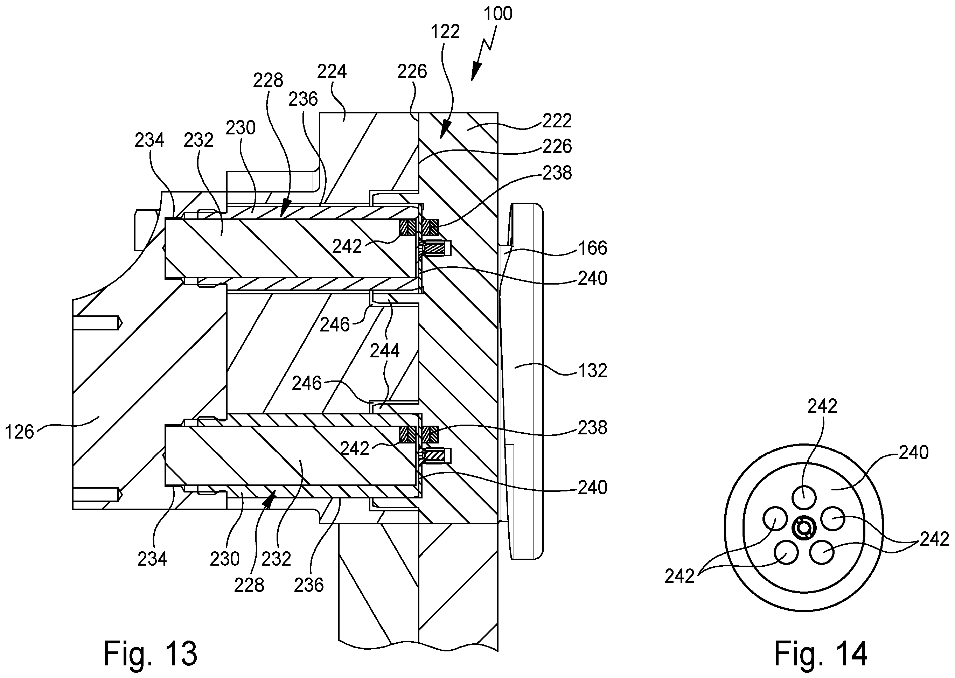

Im vorliegenden Fall ist das Statorteil 222 an der Halteeinrichtung 126 gehalten. Wie beispielsweise anhand der Figuren 2 und 13 ersichtlich ist, umfasst die Fördervorrichtung 100 vorliegend zwei mit der Halteeinrichtung 126 verbundene Halteteile 228.

Das jeweilige Halteteil 228 ist im vorliegenden Beispiel zweiteilig und umfasst ein Hülsenelement 230 und ein Zapfenelement 232. Das Hülsenelement 230 ist am Rand einer Aufnahme 234 der Halteeinrichtung 126 fixiert und umgibt das in die Aufnahme 234 eingreifende Zapfenelement 232.

Durch die zweiteilige Ausführung des Halteteils 228 besteht die Möglichkeit, nur das Hülsenelement 230 pharmagerecht auszugestalten, wohingegen das Zapfenelement 232 dies nicht zu sein braucht, weil es vollumfänglich vom Hülsenelement 230 umgeben und abgeschottet ist.

Bei einer alternativen Ausführungsform kann das Halteteil 228 einteilig ausgestaltet sein.

Die Elemente 230, 232 durchgreifen eine Durchgangsöffnung 236 am zweiten Statorteil 224 und ragen in Richtung des ersten Statorteils 222.

Das erste Statorteil 222 umfasst eine Mehrzahl von Magnetelementen 238, die in ihnen zugeordneten Aufnahmen an der dem Statorteil 224 zugewandten Seite angeordnet sind. Ein Abdeckelement 240, beispielsweise in Gestalt einer Scheibe, überdeckt die Magnetelemente 238. Die Abdeckelement ist zum Beispiel durch Verschraubung mit dem Statorteil 222 verbunden.

Stirnseitig umfasst das Zapfenelement 232 korrespondierende Magnetelemente 242, die mit den Magnetelementen 238 zusammenwirken können. Figur 14 zeigt die Magnetelemente 242 in stirnseitiger Ansicht des Zapfenelementes 232, die in diesem vorzugsweise gekapselt sind, insbesondere vergossen oder mittels eines Abdeckelementes überdeckt. Hierbei ist eine Mehrzahl von über die Stirnfläche des Zapfenelementes 232 angeordneten Magnetelementen 242 vorgesehen.

Der Einsatz von Magnetelementen 238, 242 ermöglicht eine pharmagerechte Umsetzung der Fördervorrichtung 100 mit guten Reinigungseigenschaften. Statt der magnetischen Verbindung der Statorteile 222, 224 miteinander kann eine andersartige Verbindung vorgesehen sein, direkt oder über das Halteteil 228.

Am Statorteil 222 ist ferner ein vorliegend ringförmiger Vorsprung 244 angeordnet, der in eine korrespondierende Ausnehmung 246 am Statorteil 224 eingreift. Der Vorsprung 244 umgibt das Hülsenelement 230.

Die Stirnseite des Zapfenelementes 232 fluchtet mit der Anlagefläche 226 des Statorteils 224. In der Gebrauchsstellung ist das Statorteil 222 mit dem Zapfenelement 232 lösbar verbunden und liegt über die Anlageflächen 226 fluchtend am Statorteil 224 an, das seinerseits über das Hülsenelement 230 und das Zapfenelement 232 gehalten ist. Eine axiale Verschiebung wird durch das Statorteil 222 unterbunden.

Im vorliegenden Fall sind jeweils zwei Elemente 230, 232, zwei Durchgangsöffnungen 236 und zwei Vorsprünge 244 mit zwei Ausnehmungen 246 und korrespondierende Magnetelemente 238, 242 vorgesehen (Figur 13). In einer Anordnung dieser Komponenten ist das Halteteil 228 mit Spiel innerhalb der Durchgangsöffnung 236 angeordnet, vorliegend der oberen. Dies ermöglicht über das Spiel eine Bewegung des Statorteils 224 relativ zum Statorteil 222 auch in der Gebrauchsstellung. Dies erweist sich als vorteilhaft, um ein Verkanten von Behältern 102 zu vermeiden.

Im Fall des Verkantens kann das Statorteil 222 durch Überwindung der Magnetkraft gelöst werden. Dies bietet auch den Vorteil, dass durch die jeweilige Aufteilung der Öffnungen 142, 176, und 178 auf beide Statorteile 22, 224 handhabungsfreundlich auf die Öffnungen zugegriffen werden kann sowie auf sich darin befindende verkantete Behälter 102.

Die Fördervorrichtung 100 umfasst eine Mehrzahl von Formatsätzen 248 (Figur 1). Ein jeweiliger Formatsatz umfasst eine Statoreinrichtung 122, einen Drehkörper 128, ein Anschlagelement 132 und/oder ein Sperrelement 184. Die Formatteile eines Formatsatzes sind behälterspezifisch und können gegen die Formatteile eines anderen Formatsatzes 248 ausgetauscht werden. Dies erlaubt es auf einfache und handhabungsfreundliche Weise, die Fördervorrichtung 100 mit Behältern 102 unterschiedlicher Ausgestaltung einzusetzen.

### Bezugszeichenliste

- 100: Fördervorrichtung
- 102: Behälter
- 104: Fläschchen
- 106: Bauchabschnitt
- 108: Halsabschnitt
- 110: Maschine
- 112: Verarbeitungsstation
- 114: Fördervorrichtung
- 116: Fördertopf
- 118: Zufuhrbahn
- 120: Boden
- 122: Statoreinrichtung
- 124: Rotoreinrichtung
- 126: Halteeinrichtung
- 128: Drehkörper
- 130: Antriebseinheit
- 132: Anschlagelement
- 134: Motor
- 136: Getriebe
- 138: Drehachse
- 140: Umhausung
- 142: Aufnahmeöffnung
- 144: Zylinder
- 146: Mantel
- 148: Stirnseite
- 150: Innenumfangsfläche
- 152: Drehrichtung
- 154: Aufnahme
- 156: Ausnehmung
- 158: Achse
- 160: Befestigungsabschnitt
- 162: Scheibenelement
- 164: Anschlagabschnitt
- 166: Höhenprofil
- 168: ansteigende Flanke
- 170: abfallende Flanke
- 172: Übergangsbereich
- 174: mittlerer Abschnitt
- 176: Übergabeöffnung
- 178: Abgabeöffnung
- 180: Schwerkraft
- 182: Zufuhrrichtung
- 184: Sperrelement
- 186: Klemmelement
- 190: Aussparung
- 192: Antriebseinheit
- 193: Antrieb
- 194: Kopplungselement
- 196: Steuereinrichtung
- 198: Anlageelement
- 200: Fallschacht
- 202: Stützelement
- 204: Rohr
- 206: Führungselement
- 208: Führungsbahn
- 210: Kulisse
- 212: Vertiefung
- 214: Rand
- 216: Verjüngung
- 218: Abschnitt
- 220: Kontur
- 222, 224: Statorteil
- 226: Anlagefläche
- 228: Halteteil
- 230: Hülsenelement
- 232: Zapfenelement
- 234: Aufnahme
- 236: Durchgangsöffnung
- 238: Magnetelement
- 240: Abdeckelement
- 242: Magnetelement
- 244: Vorsprung
- 246: Ausnehmung
- 248: Formatsatz

## Patentansprüche

1. Fördervorrichtung (100) für insbesondere pharmazeutische Behälter (102) aus einem Kunststoffmaterial, umfassend eine Statoreinrichtung (122) mit einer Übergabeöffnung (176) für die Behälter (102), die aufeinanderfolgend über eine Zufuhrbahn (118) in einer Zufuhrrichtung (182) insbesondere unausgerichtet zuführbar sind, und eine Rotoreinrichtung (124), die einen an der Statoreinrichtung (122) um eine Drehachse (138) drehbaren Drehkörper (128) und eine Antriebseinheit (130) für den Drehkörper (128) umfasst,
wobei der mindestens eine Drehkörper (128) mindestens eine Aufnahme (154) für einen Behälter (102) umfasst, die in einer Übergabeposition mit der Übergabeöffnung (176) fluchtet,
und wobei die Statoreinrichtung (122) eine Abgabeöffnung (178) im Abstand zur Übergabeöffnung (176) umfasst, der der Behälter (102) durch Rotation des mindestens einen Drehkörpers (128) zuführbar ist,
ein Führungselement (206) für den Behälter (102) in Richtung der Abgabeöffnung (178) in Form einer sich in Richtung der Abgabeöffnung (178) verjüngenden Führungsbahn (208),
und Anlageelemente (198) für den Behälter (102) an einander gegenüberliegenden Seiten der Abgabeöffnung (178),
wobei die Führungsbahn (208) eine Vertiefung (212) aufweist, in die der Behälter (102) bei der Rotation des mindestens einen Drehkörpers (128) eingreift, und wobei die Anlageelemente (198) durch einen relativ zur Vertiefung (212) erhöhten Rand der Abgabeöffnung (178) gebildet sind.

2. Fördervorrichtung (100) nach Anspruch 1, **dadurch gekennzeichnet, dass** mindestens eines der Folgenden gilt:
- eine Achse (158) der mindestens einen Aufnahme ist (154) parallel zu der Drehachse (138) des mindestens einen Drehkörpers (128) ausgerichtet und/oder ist parallel zur Ausrichtung der Übergabeöffnung (176) ausgerichtet;
- das Führungselement (206) ist entlang einer Innenumfangsfläche (150) einer den mindestens einen Drehkörper (128) aufnehmenden Aufnahmeöffnung (142) der Statoreinrichtung (122) angeordnet;
- das Führungselement (206) ist ausgehend von der Übergabeöffnung (176) erstreckt, und/oder das Führungselement (206) ist bis zur Abgabeöffnung (178) erstreckt;
- die Führungsbahn (208) weist zumindest abschnittsweise eine kontinuierliche Verjüngung (216) auf.

3. Fördervorrichtung (100) nach einem der voranstehenden Ansprüche, **dadurch gekennzeichnet, dass** zumindest eines der Folgenden gilt:
- eine Orientierung des Behälters (102) wird während des Transports in der mindestens einen Aufnahme (154) von der Übergabeöffnung (176) zur Abgabeöffnung (178) nicht verändert;
- die Übergabeöffnung (176) ist bezogen auf eine Höhenrichtung oberhalb der Abgabeöffnung (178) angeordnet, wobei die Übergabeöffnung (176) insbesondere in der Schwerkraftrichtung direkt oberhalb der Abgabeöffnung (178) angeordnet ist;
- der mindestens eine Drehkörper (128) ist ein Zylinder (144) oder umfasst einen Zylinder (144), wobei ein in der Übergabeöffnung (176) angeordneter Behälter (102) an einem Mantel (146) des Zylinders (144) anliegt, bis die mindestens eine Aufnahme (154) mit der Übergabeöffnung (176) fluchtet;
- die Fördervorrichtung (100) umfasst einen sich an die Abgabeöffnung (178) anschließenden Fallschacht (200) für den Behälter (102), der insbesondere durch ein Rohr (204) oder ein Hohlprofil gebildet ist.

4. Fördervorrichtung (100) nach einem der voranstehenden Ansprüche, **dadurch gekennzeichnet, dass** der mindestens eine Drehkörper (128) zwei oder mehr Aufnahmen (154) umfasst, die in Umfangsrichtung der Drehachse (138) insbesondere gleiche Winkelabstände voneinander aufweisen.

5. Fördervorrichtung (100) nach einem der voranstehenden Ansprüche, **dadurch gekennzeichnet, dass** die Übergabeöffnung (176) eine Durchgangsöffnung der Statoreinrichtung (122) ist und dass die Fördervorrichtung (100) ein mit dem mindestens einen Drehkörper (128) gekoppeltes Anschlagelement (132) umfasst, wobei ein zugeführter Behälter (102) bis zum Kontakt mit dem Anschlagelement (132) in der Übergabeöffnung (176) bewegbar ist.

6. Fördervorrichtung (100) nach Anspruch 5, **dadurch gekennzeichnet, dass** das Anschlagelement (132) unter der Rotation des mindestens einen Drehkörpers (128) relativ zur Übergabeöffnung (176) zurückweicht.

7. Fördervorrichtung (100) nach Anspruch 5 oder 6, **dadurch gekennzeichnet, dass** zumindest eines der Folgenden gilt:
- das Anschlagelement (132) ist mit dem mindestens einen Drehkörper (128) verbunden oder von diesem gebildet, wobei das Anschlagelement (132) insbesondere ein Scheibenelement (162) ist, das den mindestens einen Drehkörper (128) radial überragt und die Übergabeöffnung (176) überdeckt;
- das Anschlagelement (132) weist ein Höhenprofil (166) auf, das in Richtung auf die Statoreinrichtung (122) eine ansteigende Flanke (168) und eine abfallende Flanke (170) aufweist, wobei die mindestens eine Aufnahme (154) vorzugsweise dann mit der Übergabeöffnung (176) fluchtet, wenn das Höhenprofil (166) an einem Übergangsbereich (172) von der abfallenden Flanke (170) zur ansteigenden Flanke (168) oder an der abfallenden Flanke (170) an der Übergabeöffnung (176) angeordnet ist.

8. Fördervorrichtung (100) nach einem der voranstehenden Ansprüche, **dadurch gekennzeichnet, dass** die Fördervorrichtung (100) ein Sperrelement (184) umfasst, über das in einer Fixierstellung ein nachfolgender Behälter (102) in der Übergabeöffnung (176) oder zufuhrseitig der Übergabeöffnung (176) fixierbar ist, und das den nachfolgenden Behälter (102) zur weiteren Bewegung in die Übergabeöffnung (176) in einer Freigabestellung freigibt, wobei das Sperrelement (184) mittels einer Antriebseinheit (192) von der Fixierstellung in die Freigabestellung und/oder umgekehrt überführbar ist.

9. Fördervorrichtung (100) nach Anspruch 8, **dadurch gekennzeichnet, dass** die Fördervorrichtung (100) eine Steuereinrichtung (196) umfasst, über die die Antriebseinheit (130) für den mindestens einen Drehkörper (128) und die Antriebseinheit (192) für das Sperrelement (184) synchronisiert sind.

10. Fördervorrichtung (100) nach Anspruch 8 oder 9, **dadurch gekennzeichnet, dass** das Sperrelement (184) ein Klemmelement (186) ist, über das der nachfolgende Behälter (102) an einem Rand der Übergabeöffnung (176) verklemmbar ist.

11. Fördervorrichtung (100) nach einem der voranstehenden Ansprüche, **dadurch gekennzeichnet, dass** zumindest eines der Folgenden gilt:
- die Fördervorrichtung (100) umfasst jeweils zwei oder mehr Drehkörper (128), Übergabeöffnungen (176), Abgabeöffnungen (178) und Führungselemente (206), wobei jedem Drehkörper (128) eine Übergabeöffnung (176), eine Abgabeöffnung (178) und ein Führungselement (206) zugeordnet sind, wobei vorzugsweise die Drehkörper (128) gemeinsam mittels einer Antriebseinheit (130) antreibbar sind;
- die Fördervorrichtung (100) umfasst eine Mehrzahl von Formatsätzen (248), die sich hinsichtlich ihrer behälterspezifischen Eigenschaften voneinander unterscheiden, wobei ein jeweiliger Formatsatz (248) mindestens eines aus der Menge von Statoreinrichtung (122), Drehkörper (128) oder Anschlagelement (132) umfasst.

12. Fördervorrichtung (100) nach einem der voranstehenden Ansprüche, **dadurch gekennzeichnet, dass** die Statoreinrichtung (122) zwei in einer Gebrauchsstellung direkt oder indirekt vorzugsweise lösbar miteinander verbundene Statorteile (222, 224) umfasst, die gemeinsam die Übergabeöffnung (176), eine Aufnahmeöffnung (142) für den mindestens einen Drehkörper (128) und die Abgabeöffnung (178) bilden, wobei vorzugsweise die Statorteile (222, 224) zumindest abschnittsweise plattenförmig ausgestaltet sind und in der Gebrauchsstellung über jeweilige Anlageflächen (226) vorzugsweise planar aneinander anliegen.

13. Fördervorrichtung (100) nach Anspruch 12, **dadurch gekennzeichnet, dass** die Fördervorrichtung (100) eine Halteeinrichtung (126) umfasst und mindestens ein mit der Halteeinrichtung (126) verbundenes oder von dieser gebildetes Halteteil (228), wobei das mindestens eine Halteteil (228) mit einem ersten Statorteil (222), das im Abstand zur Halteeinrichtung (126) positioniert ist, verbunden ist, und ein zweites Statorteil (224) zwischen der Halteeinrichtung (126) und dem ersten Statorteil (222) angeordnet ist und mindestens eine Durchgangsöffnung (236) umfasst, durch die das mindestens eine Halteteil (228) hindurchgreift.

14. Fördervorrichtung (100) nach Anspruch 13, **dadurch gekennzeichnet, dass** zumindest eines der Folgenden gilt:
- das erste Statorteil (222) ist am mindestens einen Halteteil (228) lösbar festlegbar, vorzugsweise mittels korrespondierender Magnetelemente (238, 242);
- das zweite Statorteil (224) ist frei von einer Verbindung mit der Halteeinrichtung (126).

15. Fördervorrichtung (100) nach Anspruch 13 oder 14, **dadurch gekennzeichnet, dass** das mindestens eine Halteteil (228) die mindestens eine Durchgangsöffnung (236) mit Spiel durchgreift und dadurch eine Bewegung des zweiten Statorteils (224) relativ zum ersten Statorteil (222) und/oder zur Halteeinrichtung (126) in der Gebrauchsstellung der Statorteile (222, 224) zueinander möglich ist.

## Claims

1. A conveying apparatus (100) for in particular pharmaceutical containers (102) made of a plastic material, comprising a stator device (122) having a transfer opening (176) for the containers (102), which are successively feedable via a feed track (118) in a feed direction (182), in particular in an unaligned manner, and comprising a rotor device (124), which comprises a rotating body (128), rotatable about an axis of rotation (138) on the stator device (122), and a drive unit (130) for the rotating body (128),
wherein the at least one rotating body (128) comprises at least one receptacle (154) for a container (102), which receptacle aligns with the transfer opening (176) in a transfer position, and wherein the stator device (122) comprises a dispensing opening (178) at a distance from the transfer opening (176), to which dispensing opening the container (102) is feedable by rotation of the at least one rotating body (128),
a guide element (206) for the container (102) in the direction of the dispensing opening (178), in the shape of a guide track (208) that tapers in the direction of the dispensing opening (178),
and support elements (198) for the container (102) on opposite sides of the dispensing opening (178),
wherein the guide track (208) has a depression (212) in which the container (102) engages during the rotation of the at least one rotating body (128), and wherein the support elements (198) are formed by an edge of the dispensing opening (178), which edge is raised relative to the depression (212).

2. The conveying apparatus (100) in accordance with claim 1, **characterized in that** at least one of the following applies:
- an axis (158) of the at least one receptacle (154) is aligned in parallel with the axis of rotation (138) of the at least one rotating body (128) and/or in parallel with the alignment of the transfer opening (176);
- the guide element (206) is arranged along an inner circumferential surface (150) of a receiving opening (142) of the stator device (122) receiving the at least one rotating body (128);
- the guide element (206) extends from the transfer opening (176) and/or the guide element (206) extends to the dispensing opening (178);
- the guide track (208) has, at least in sections, a continuous taper (216).

3. The conveying apparatus (100) in accordance with any one of the preceding claims, **characterized in that** at least one of the following applies:
- an orientation of the container (102) is unchanged during transport in the at least one receptacle (154) from the transfer opening (176) to the dispensing opening (178);
- the transfer opening (176) is arranged above the dispensing opening (178) in relation to a height direction, wherein the transfer opening (176) is in particular arranged directly above the dispensing opening (178) in the direction of gravity;
- the at least one rotating body (128) is a cylinder (144) or comprises a cylinder (144), wherein a container (102) arranged in the transfer opening (176) abuts a lateral surface (146) of the cylinder (144) until the at least one receptacle (154) aligns with the transfer opening (176);
- the conveying apparatus (100) comprises a drop shaft (200) for the container (102), which drop shaft (200) adjoins the dispensing opening (178) and is formed in particular by a tube (204) or a hollow profile.

4. The conveying apparatus (100) in accordance with any one of the preceding claims, **characterized in that** the at least one rotating body (128) comprises two or more receptacles (154) which, in particular, have equal angular distances from one another in the circumferential direction of the axis of rotation (138).

5. The conveying apparatus (100) in accordance with any one of the preceding claims, **characterized in that** the transfer opening (176) is a through-opening of the stator device (122) and **in that** the conveying apparatus (100) comprises a stop element (132) coupled to the at least one rotating body (128), wherein a fed container (102) is movable in the transfer opening (176) until contacting with the stop element (132).

6. The conveying apparatus (100) in accordance with claim 5, **characterized in that** the stop element (132) retreats relative to the transfer opening (176) under the rotation of the at least one rotating body (128).

7. The conveying apparatus (100) in accordance with claim 5 or 6, **characterized in that** at least one of the following applies:
- the stop element (132) is connected to or formed by the at least one rotating body (128), wherein the stop element (132) is in particular a disk element (162) which projects radially beyond the at least one rotating body (128) and covers the transfer opening (176);
- the stop element (132) has a height profile (166), which has a rising flank (168) and a falling flank (170) toward the stator device (122), wherein the at least one receptacle (154) preferably aligns with the transfer opening (176) when the height profile (166) at a transition region (172) from the falling flank (170) to the rising flank (168) or at the falling flank (170) is arranged at the transfer opening (176).

8. The conveying apparatus (100) in accordance with any one of the preceding claims, **characterized in that** the conveying apparatus (100) comprises a locking element (184) via which in a fixing position a following container (102) is fixable in the transfer opening (176) or on the feed side of the transfer opening (176), and which releases the following container (102) for further movement into the transfer opening (176) in a release position, wherein the locking element (184) is transferable by means of a drive unit (192) from the fixing position to the release position and/or vice versa.

9. The conveying apparatus (100) in accordance with claim 8, **characterized in that** the conveying apparatus (100) comprises a control device (196) via which the drive unit (130) for the at least one rotating body (128) and the drive unit (192) for the locking element (184) are synchronized.

10. The conveying apparatus (100) in accordance with claim 8 or 9, **characterized in that** the locking element (184) is a clamping element (186) via which the following container (102) is clampable to an edge of the transfer opening (176).

11. The conveying apparatus (100) in accordance with any one of the preceding claims, **characterized in that** at least one of the following applies:
- the conveying apparatus (100) comprises two or more rotating bodies (128), transfer openings (176), dispensing openings (178) and guide elements (206), wherein each rotating body (128) is assigned a transfer opening (176), a dispensing opening (178) and a guide element (206), wherein preferably the rotating bodies (128) are jointly drivable by means of one drive unit (130);
- the conveying apparatus (100) comprises a plurality of format sets (248), which differ from one another with regard to their container-specific properties, wherein a respective format set (248) comprises at least one of the set of stator device (122), rotating body (128) or stop element (132).

12. The conveying apparatus (100) in accordance with any one of the preceding claims, **characterized in that** the stator device (122) comprises two stator parts (222, 224) which are directly or indirectly, preferably detachably, connected to one another in a position of use and which together form the transfer opening (176), a receiving opening (142) for the at least one rotating body (128), and the dispensing opening (178), wherein preferably the stator parts (222, 224) are at least partially plate-shaped and, in the position of use, abut one another, preferably flat, via respective contact surfaces (226).

13. The conveying apparatus (100) in accordance with claim 12, **characterized in that** the conveying apparatus (100) comprises a holding device (126) and at least one holding part (228) connected to or formed by the holding device (126), wherein the at least one holding part (228) is connected to a first stator part (222) that is positioned at a distance from the holding device (126), and a second stator part (224) is arranged between the holding device (126) and the first stator part (222) and comprises at least one through-opening (236) through which the at least one holding part (228) extends.

14. The conveying apparatus (100) in accordance with claim 13, **characterized in that** at least one of the following applies:
- the first stator part (222) is detachably securable on the at least one holding part (228), preferably by means of corresponding magnetic elements (238, 242);
- the second stator part (224) is free of a connection to the holding device (126).

15. The conveying apparatus (100) in accordance with claim 13 or 14, **characterized in that** the at least one holding part (228) extends through the at least one through-opening (236) with play and thereby allows movement of the second stator part (224) relative to the first stator part (222) and/or to the holding device (126) in the position of use of the stator parts (222, 224) relative to one another.

## Revendications

1. Appareil de transport (100) pour des contenants (102), en particulier des contenants pharmaceutiques en matière plastique, comprenant un dispositif de stator (122) avec une ouverture de transfert (176) pour les contenants (102), qui peuvent être amenés successivement par le biais d'une voie d'alimentation (118) dans une direction d'alimentation (182), en particulier de manière non orientée, et un dispositif de rotor (124), qui comprend un corps rotatif (128) pouvant tourner au niveau du dispositif de stator (122) autour d'un axe de rotation (138) et une unité d'entraînement (130) pour le corps rotatif (128),
dans lequel ledit au moins un corps rotatif (128) comprend au moins un logement (154) pour un contenant (102), lequel logement est aligné avec l'ouverture de transfert (176) dans une position de transfert,
et dans lequel le dispositif de stator (122) comprend une ouverture de sortie (178), espacée de l'ouverture de transfert (176), vers laquelle le contenant (102) peut être amené par la rotation dudit au moins un corps rotatif (128),
un élément de guidage (206) pour le contenant (102) en direction de l'ouverture de sortie (178) sous la forme d'une voie de guidage (208) qui se rétrécit en direction de l'ouverture de sortie (178),
et des éléments d'appui (198) pour le contenant (102) sur des côtés opposés l'un à l'autre de l'ouverture de sortie (178),
dans lequel la voie de guidage (208) présente un évidement (212) dans lequel le contenant (102) s'engage lors de la rotation dudit au moins un corps rotatif (128), et dans lequel les éléments d'appui (198) sont formés par un bord surélevé de l'ouverture de sortie (178) par rapport à l'évidement (212).

2. Appareil de transport (100) selon la revendication 1, **caractérisé en ce que** l'un au moins des éléments suivants s'applique :
- un axe (158) dudit au moins un logement (154) est orienté parallèlement à l'axe de rotation (138) dudit au moins un corps rotatif (128) et/ou est orienté parallèlement à l'orientation de l'ouverture de transfert (176) ;
- l'élément de guidage (206) est disposé le long d'une surface circonférentielle interne (150) d'une ouverture de réception (142) du dispositif de stator (122), l'ouverture de réception recevant ledit au moins un corps rotatif (128) ;
- l'élément de guidage (206) s'étend à partir de l'ouverture de transfert (176), et/ou l'élément de guidage (206) s'étend jusqu'à l'ouverture de sortie (178) ;
- la voie de guidage (208) présente, au moins par sections, un rétrécissement continu (216).

3. Appareil de transport (100) selon l'une des revendications précédentes, **caractérisé en ce que** l'un au moins des éléments suivants s'applique :
- une orientation du contenant (102) n'est pas modifiée pendant le transport dans ledit au moins un logement (154) depuis l'ouverture de transfert (176) jusqu'à l'ouverture de sortie (178) ;
- l'ouverture de transfert (176) est disposée, par rapport à une direction de hauteur, au-dessus de l'ouverture de sortie (178), l'ouverture de transfert (176) étant notamment disposée directement au-dessus de l'ouverture de sortie (178) dans le sens de la gravité ;
- ledit au moins un corps rotatif (128) est un cylindre (144) ou comprend un cylindre (144), un contenant (102) disposé dans l'ouverture de transfert (176) étant en appui contre une enveloppe (146) du cylindre (144) jusqu'à ce que ledit au moins un logement (154) soit aligné avec l'ouverture de transfert (176) ;
- l'appareil de transport (100) comprend un puits de chute (200) pour le contenant (102), faisant suite à l'ouverture de sortie (178), lequel est formé notamment par un tube (204) ou un profil creux.

4. Appareil de transport (100) selon l'une des revendications précédentes, **caractérisé en ce que** ledit au moins un corps rotatif (128) comprend deux ou plusieurs logements (154) qui présentent entre eux des écarts angulaires, notamment égaux, dans la direction circonférentielle de l'axe de rotation (138).

5. Appareil de transport (100) selon l'une des revendications précédentes, **caractérisé en ce que** l'ouverture de transfert (176) est une ouverture traversante du dispositif de stator (122) et **en ce que** l'appareil de transport (100) comprend un élément de butée (132) couplé audit au moins un corps rotatif (128), un contenant (102) amené pouvant être déplacé dans l'ouverture de transfert (176) jusqu'au contact avec l'élément de butée (132).

6. Appareil de transport (100) selon la revendication 5, **caractérisé en ce que** l'élément de butée (132) recule par rapport à l'ouverture de transfert (176) sous l'effet de la rotation dudit au moins un corps rotatif (128).

7. Appareil de transport (100) selon la revendication 5 ou la revendication 6, **caractérisé en ce que** l'un au moins des éléments suivants s'applique :
- l'élément de butée (132) est relié audit au moins un corps rotatif (128) ou est formé par celui-ci, l'élément de butée (132) étant notamment un élément en forme de disque (162) qui dépasse radialement dudit au moins un corps rotatif (128) et recouvre l'ouverture de transfert (176) ;
- l'élément de butée (132) présente un profil de hauteur (166) qui présente, en direction du dispositif de stator (122), un flanc montant (168) et un flanc descendant (170), ledit au moins un logement (154) étant de préférence aligné avec l'ouverture de transfert (176) lorsque le profil de hauteur (166) est disposé au niveau de l'ouverture de transfert (176) dans une zone de transition (172) du flanc descendant (170) vers le flanc montant (168) ou sur le flanc descendant (170).

8. Appareil de transport (100) selon l'une des revendications précédentes, **caractérisé en ce que** l'appareil de transport (100) comprend un élément de verrouillage (184), au moyen duquel, dans une position de fixation, un contenant (102) suivant peut être fixé dans l'ouverture de transfert (176) ou du côté alimentation de l'ouverture de transfert (176) et qui libère le contenant (102) suivant, dans une position de libération, pour un déplacement ultérieur dans l'ouverture de transfert (176), l'élément de verrouillage (184) pouvant être amené de la position de fixation à la position de libération et/ou inversement au moyen d'une unité d'entraînement (192).

9. Appareil de transport (100) selon la revendication 8, **caractérisé en ce que** l'appareil de transport (100) comprend un dispositif de commande (196) au moyen duquel l'unité d'entraînement (130) pour ledit au moins un corps rotatif (128) et l'unité d'entraînement (192) pour l'élément de verrouillage (184) sont synchronisées.

10. Appareil de transport (100) selon la revendication 8 ou la revendication 9, **caractérisé en ce que** l'élément de verrouillage (184) est un élément de serrage (186) au moyen duquel le contenant (102) suivant peut être bloqué par serrage au niveau d'un bord de l'ouverture de transfert (176).

11. Appareil de transport (100) selon l'une des revendications précédentes, **caractérisé en ce que** l'un au moins des éléments suivants s'applique :
- l'appareil de transport (100) comprend respectivement deux ou plusieurs corps rotatifs (128), ouvertures de transfert (176), ouvertures de sortie (178) et éléments de guidage (206), chaque corps rotatif (128) étant associé à une ouverture de transfert (176), une ouverture de sortie (178) et un élément de guidage (206), les corps rotatifs (128) pouvant de préférence être entraînés conjointement au moyen d'une unité d'entraînement (130) ;
- l'appareil de transport (100) comprend une pluralité de jeux de formats (248), qui se distinguent les uns des autres quant à leurs propriétés spécifiques au contenant, un jeu de formats (248) respectif comprenant au moins un élément choisi dans l'ensemble constitué par le dispositif de stator (122), le corps rotatif (128) ou l'élément de butée (132).

12. Appareil de transport (100) selon l'une des revendications précédentes, **caractérisé en ce que** le dispositif de stator (122) comprend deux parties de stator (222, 224) reliées l'une à l'autre directement ou indirectement, de préférence de manière amovible, dans une position d'utilisation, lesquelles forment conjointement l'ouverture de transfert (176), une ouverture de réception (142) pour ledit au moins un corps rotatif (128) et l'ouverture de sortie (178), les parties de stator (222, 224) étant de préférence conçues au moins par sections sous forme de plaque et étant en appui l'une contre l'autre, de préférence de manière plane, dans la position d'utilisation, par l'intermédiaire de surfaces d'appui respectives (226).

13. Appareil de transport (100) selon la revendication 12, **caractérisé en ce que** l'appareil de transport (100) comprend un dispositif de maintien (126) et au moins une pièce de maintien (228) reliée au dispositif de maintien (126) ou formée par celui-ci, ladite au moins une pièce de maintien (228) étant reliée à une première partie de stator (222) qui est positionnée à distance du dispositif de maintien (126), et une deuxième partie de stator (224) étant disposée entre le dispositif de maintien (126) et la première partie de stator (222) et comprenant au moins une ouverture traversante (236) à travers laquelle passe ladite au moins une pièce de maintien (228).

14. Appareil de transport (100) selon la revendication 13, **caractérisé en ce que** l'un au moins des éléments suivants s'applique :
- la première partie de stator (222) peut être fixée de manière amovible sur ladite au moins une pièce de maintien (228), de préférence au moyen d'éléments magnétiques (238, 242) correspondants ;
- la deuxième partie de stator (224) est dépourvue de liaison avec le dispositif de maintien (126).

15. Appareil de transport (100) selon la revendication 13 ou la revendication 14, **caractérisé en ce que** ladite au moins une pièce de maintien (228) traverse ladite au moins une ouverture traversante (236) avec du jeu et permet ainsi un mouvement de la deuxième partie de stator (224) par rapport à la première partie de stator (222) et/ou au dispositif de maintien (126) dans la position d'utilisation des parties de stator (222, 224) l'une par rapport à l'autre.
